# EUROPEAN PATENT APPLICATION

(11) **EP 2 469 796 A2**
(43) Date of publication of application: **27.06.2012**
(21) Application number: 12160410.2
(22) Date of filing: 01.05.2008
(51) Int. Cl.: H04L 29/06, G06F 17/30

(54) **Service integration on a network**

(30) Priority: 03.05.2007 US 743966; 03.05.2007 US 744034
(62) Divisional of application: 08747369.0
(71) Applicant: Sonus Networks, Inc., Westford, MA 01886 (US)
(72) Inventor: Shekar, Nagesh, 560082 Bangalore (IN); Saksena, Vikram, Acton, MA Massachusetts 01720 (US); Farahmand, Fardad, Wellesley, MA Massachusetts 02481 (US); Menon, Sunil, 66 Bangalore (IN); Cholkar, Arjun, 560037 Vibhutipura (IN); Nagpal, Ashish, 560037 Kundalahalli (IN); Venkata, Nagesh Kumar, 560032 Bangalore (IN)
(74) Representative: Greene, Simon Kenneth

(57) **Abstract**

Described are computer-based methods and apparatuses, including computer program products, for service integration on a network and/or personal service integration on the network. In some aspects, telecommunication services (e.g., calendar, television, phone, location) on a network are integrated using service codelets designed to interface with the services. A default codelet associated with the user (e.g., via a service plan) dynamically calls the service codelets to request information from the associated services (e.g., calendar data) and/or perform tasks with the associated services (e.g., update calendar). The service codelets can dynamically call other service codelets based on the results of their requests for information. The information from the services is integrated and returned to the user. In other aspects, a personal service monitors and stores user requests for services. The stored user requests are processed to determine usage patterns. The personal service processes the usage patterns to determine future requests and/or to determine how to fulfill a request. The personal service processes the request.

## Description

### FIELD OF THE INVENTION

The present invention relates generally to computer-based methods and apparatuses, including computer program products, for telecommunication service integration on a network and/or for personal telecommunication service integration on a network.

### BACKGROUND

Telecommunications networks are increasing in size and complexity. The increase in size and complexity of telecommunication networks is due in part to the increase in the number of telecommunication services and the increase in the number of users on telecommunication networks. New telecommunication services are added to telecommunication networks on a regular basis which adds to the size and complexity of the telecommunication network.

The telecommunication services communicate utilizing session initiation protocol (SIP) and internet protocol multimedia system (IMS). The communication of telecommunication services utilizing SIP and IMS and the number of telecommunications services needed to service the large number of users increases the complexity of the telecommunication network by dramatically increasing the communication messages on the network so that the different services can communicate with each other. The increased number of telecommunication services and the increased number of users causes a dramatic increase in the size and the complexity of the network. This increase in the network causes access to the network to become challenging if not impossible when new services are added and during peak periods of use by users.

### SUMMARY OF THE INVENTION

One approach to service integration on a network is a method. The method includes receiving a request from a user, associating a default codelet with the request, processing the default codelet to associate a plurality of service codelets with the request, processing a first codelet from the plurality of service codelets to communicate with a first resource server, and processing a second codelet from the plurality of service codelets to communicate with a second resource server. The first codelet is different from the second codelet and the first resource server is different from the second resource server.

Another approach to service integration on a network is a computer program. The computer program product is tangibly embodied in an information carrier. The computer program product includes instructions being operable to cause a data processing apparatus to receive a request from a user, associate a default codelet with the request, process the default codelet to associate a plurality of service codelets with the request, process a first codelet from the plurality of service codelets to communicate with a first resource server, process a second codelet from the plurality of service codelets to communicate with a second resource server. The first codelet is different from the second codelet and the first resource server is different from the second resource server.

Another approach to service integration on a network is a system. The system includes a service handler module, a default codelet, a first codelet, and a second codelet. The service handler module is configured to receive a request from a computing device. The default codelet is configured to associate a plurality of service codelets with the request. The first codelet from the plurality of service codelets is configured to communicate with a first resource server. The second codelet from the plurality of service codelets is configured to communicate with a second resource server. The first codelet is different from the second codelet. The first resource server is different from the second resource server.

Another approach to service integration on a network is a system. The system includes a means for receiving a request from a computing device, a means for associating a plurality of service codelets with the request, a means for communicating with a first resource server, and a means for communication with a second resource server. The means for communicating with the first resource server is different from the means for communicating with the second resource server. The first resource server is different from the second resource server.

One approach to personal service integration on a network is a method. The method includes monitoring a plurality of requests associated with a user, determining a first pattern based on the plurality of requests associated with the user, determining one or more telecommunication services from a plurality of telecommunication services based on the first pattern, and modifying the one or more telecommunication services based on information associated with the first pattern.

Another approach to personal service integration on a network is a computer program product. The computer program product is tangibly embodied in an information carrier. The computer program product includes instructions being operable to cause a data processing apparatus to monitor a plurality of requests associated with a user, determine a first pattern based on the plurality of requests associated with the user, determine one or more telecommunication services from a plurality of telecommunication services based on the first pattern, and modify the one or more telecommunication services based on information associated with the first pattern.

Another approach to personal service integration on a network is a system. The system includes a personal service module, a personal service server, and a service module. The personal service module monitors a plurality of requests associated with a user. The personal service server determines a first pattern based on the plurality of requests associated with the user and determine one or more telecommunication services from a plurality of telecommunication services based on the first pattern. The service module modifies the one or more telecommunication services based on information associated with the first pattern.

Another approach to personal service integration on a network is a system. The system includes a means for monitoring a plurality of requests associated with a user, a means for determining a first pattern based on the plurality of requests associated with the user and determining one or more telecommunication services from a plurality of telecommunication services based on the first pattern, and a means for modifying the one or more telecommunication services based on information associated with the first pattern.

In other examples, any of the approaches above can include one or more of the following features. The second codelet utilizes results from the processing of the first codelet. The processing the default codelet further includes selecting a third codelet based on a default template, information associated with the user, and/or policy information associated with a business application.

In some examples, a third codelet is processed from the plurality of service codelets to communicate with a third resource server. The third codelet is selected based on processing the first codelet.

In other examples, a fourth codelet is processed from the plurality of service codelets to communicate with a fourth resource server. The fourth codelet is selected based on processing the first codelet.

In some examples, a blended service package includes the default codelet, the first codelet, the second codelet, the third codelet, the fourth codelet, and/or a extensible markup language descriptor file.

In other examples, the fourth codelet is prioritized for processing before the third codelet. The default codelet is processed to generate a list of codelets. A predetermined grouping including the first codelet and the second codelet is defined. The first codelet and the second codelet are deployed at runtime.

In some examples, the first resource server is associated with one or more application servers. The one or more application servers include a presence server, a calendar server, a messaging server, a conference server, a collaboration server, a location server, a personalization server, an electronic mail server, a business communication server, a phone server, a voicemail server, an internet television server, and/or a storage server.

In other examples, the first resource server is associated with message conversion, presence status capabilities, calendar capabilities, message transmission and receiving capabilities, conference capabilities, location identification capabilities, social attribute identification capabilities, business communication capabilities, electronic mail capabilities, phone capabilities, voicemail capabilities, television capabilities, and/or storage capabilities.

In some examples, the first resource server is associated with one or more IPTV capabilities. The one or more IPTV capabilities includes advertisement insertion, extracting user preferences from a content search application, and/or content searching.

In other examples, the first resource server is associated with a personal service server. The plurality of service codelets includes reentrant software. The plurality of service codelets includes multi-threaded software.

In some examples, a third codelet from the plurality of service codelets is configured to communicate with a third resource server and the third codelet is selected by the first codelet.

In other examples, a fourth codelet from the plurality of service codelets is configured to communicate with a fourth resource server and the fourth codelet is selected by the first codelet.

In some examples, a voice to text module is configured to convert the request from an audio format to a non-audio format.

In other examples, any of the approaches above can include one or more of the following features. In some examples, the one or more telecommunication services determined based on a request received from a user. The request received from the user is received by a digital personal assistant module. Processing the request includes using speech recognition, handwriting recognition, and/or text processing.

In other examples, a future request associated with a user based on the first pattern is determined and whether to process the future request based on a user response is determined.

In some examples, a digital personal assistant module queries the user regarding the future request and the user response associated with the future request is received.

In other examples, a pre-existing template is selected and the pre-existing template is modified based on the first pattern. The modifying includes generating a first template based on the first pattern. A second pattern based on the plurality of requests associated with a user is determined.

In some examples, the first pattern is associated with a first telecommunication service and the second pattern is associated with a second telecommunication service. The one or more telecommunications services includes a message service, a presence status service, a calendar service, a message transmission and receiving service, a conference service, a location identification service, a social attribute identification service, a business communication service, an entertainment service, an information service, an electronic mail service, a phone service, a voicemail service, a television service, and/or a storage service.

In other examples, the first pattern is stored in a storage module. A pre-existing template is selected and the pre-existing template is modified based on the first pattern stored in the storage module.

In some examples, the personal service server receives a request from a user and determines the one or more telecommunication services from the plurality of telecommunication services based on the request from the user. A voice to text module converts the request from the user from a vocal request to a text based request.

In other examples, the personal service server determines a future request associated with a user based on the first pattern and determines whether to process the future request based on a user response. A storage module stores the first pattern and/or the plurality of requests. A virtual personal assistant module receives requests from the user an/or queries the user regarding a future request.

Any of the aspects and examples above can provide one or more of the following advantages. An advantage to the integration of services on a network is that services can be integrated together to allow for services to have information regarding presence, location, policies, and/or user preferences. Another advantage is that existing services that do not have information associated with other services can be expanded to include information associated with the other services. For example, a calendar service that does not have access to location information can be integrated so that location information associated with a location service is integrated into the information from the calendar service.

An additional advantage to the integration of services on a network is that an existing service can be added into an integration of services without modifying the existing services by utilizing the ability to request information from the existing services and/or perform tasks with the existing services. Another advantage is that the ability to add, delete, and/or modify the services that are available for integration on a network allows for services to be quickly and efficiently integrated into other services on a network.

Another advantage to the integration of services on a network is that the service codelets communicating with the services can be prioritized so that multiple services can proceed based on a network event. An additional advantage is that the service codelets communicating with the services can be linked together so that multiple services can be called in a predetermined sequence. Another advantage is that new combinations of services can be added to allow for the synergistic integration of services on the network.

An additional advantage to the integration of services on a network is that different networks can utilize the same services which allows for a cross-platform use of services. For example, a first user on a wireless network can utilize the same calendar and conference services as a second user on a wired network. Another advantage is that a user can utilize the integrated services without having to be aware of the interfaces to the specific services because service codelets are used to access the services.

Another advantage to the integration of services on a network is that blended service packages can be utilized to combine services to allow for the synergistic integration of services on the network. For example, a blended service package can be formed between a calendar service and conference service to enable a user to access not only the information associated with the calendar service and the conference service but also the information that results from the combination of the information from the calendar service and the conference service. An additional advantage is that blended service packages can be utilized to modularize access to different sets of services. For example, a user can be associated with a meeting service package that accesses a calendar service and a conference service and a conference call package that accesses a location service and a phone service allowing for different service packages to be called based on the type of service integration that the user needs to utilize.

An advantage to the personal service integration on a network is that a user's needs can be effectively managed by combining the user's communication, information sharing, and entertainment needs together to form a synergistic combinations of services. Another advantage to the personal service integration on a network is that a diverse set of user communication preferences and patterns can be utilized to determine the usage patterns of the user. For example, the user preferences for the user's cell phone, computer, and/or television can be combined with the usage from the user's cell phone, computer, and/or television to determine the usage patterns of the user.

Another advantage to the personal service integration on a network is that the personal service server can be implemented on a carrier network (e.g., phone, television, and cell phone network) which allows for a plurality of forms of communication and interactions to be monitored and controlled by the personal service server. An additional advantage to the personal service integration on a network is that the personal service server can manage the user's needs while utilizing the user's social attributes, preferences, and privacy settings.

Another advantage to the personal service integration on a network is that the personal service server can process the user requests, determines usage patterns, and processes usage patterns on the network side of the user transactions which allows for a holistic view of the user interactions. An additional advantage to the personal service integration on a network is that the personal service server and the personal service interface on the computing device can blend speech recognition, rich animated graphics, and intelligence in the service network to manage the subscriber's complex, multidimensional interactions at the touch of a button and/or at an utterance of a command.

Another advantage to the personal service integration on a network is that services can be integrated together to allow for the personal service server to have information regarding presence, location, policies, and/or user preferences. Another advantage to the personal service integration on a network is that new combinations of services can be added to allow for the synergistic integration of services on the network. An additional advantage to the personal service integration on a network is that different networks can utilize the same services through the personal service server which allows for a cross-platform use of services. For example, a first user on a wireless network can utilize the same calendar and conference services as a second user on a wired network.

Other aspects and advantages of the present invention will become apparent from the following detailed description, taken in conjunction with the accompanying drawings, illustrating the principles of the invention by way of example only.

### BRIEF DESCRIPTION OF THE DRAWINGS

The foregoing and other objects, features, and advantages of the present invention, as well as the invention itself, will be more fully understood from the following description of various embodiments, when read together with the accompanying drawings.

FIG. 1 is a functional block diagram of an exemplary system illustrating service integration on a network.

FIG. 2 is a functional block diagram of an exemplary system illustrating a blended service package providing service integration on a network.

FIG. 3A is a diagram of exemplary calendar information.

FIG. 3B is a diagram of exemplary conference information.

FIG. 4 is a exemplary screenshot of information illustrating an interaction between a user and a service broker server.

FIG. 5 is an exemplary diagram illustrating an interaction between a user and a cell phone to place a request.

FIG. 6A is a diagram of exemplary calendar information.

FIG. 6B is a diagram of exemplary presence information.

FIG. 7 is an exemplary process diagram illustrating an interaction between a user and a service network to place a request.

FIG. 8 is an exemplary flowchart depicting processing of a default codelet and service codelets.

FIG. 9 is an exemplary flowchart depicting processing of a default codelet and service codelets.

FIG. 10 is a functional block diagram of an exemplary system illustrating the interactions between a user and a personal service server.

FIG. 11 is a functional block diagram of an exemplary system illustrating the interactions between users and a personal service server.

FIG. 12A is a diagram of exemplary personal service information.

FIG. 12B is a diagram of exemplary presence information.

FIG. 13 is an exemplary screenshot illustrating the interaction between a user and a personal service server.

FIG. 14 is an exemplary screenshot illustrating the interaction between a user and a personal service server depicting a digital personal assistant.

FIG. 15 is a process diagram illustrating the processing of a future request generated by the personal service server.

FIG. 16 is a diagram of an exemplary request by a user.

FIG. 17 is a process diagram illustrating the processing of a user request.

FIG. 18A is a diagram of exemplary personal services information.

FIG. 18B is a diagram of exemplary movie information.

FIG. 19 is an exemplary screenshot illustrating the interaction between a user and a personal service server.

FIG. 20 is a flowchart diagram depicting generation of future requests for a user.

### DETAILED DESCRIPTION

In general overview, services (e.g., calendar, television, phone, location) on a network are integrated using service codelets designed to interface with the services. A default codelet associated with the user (e.g., via a service plan) dynamically calls the service codelets to request information from the associated services (e.g., calendar data) and/or perform tasks with the associated services (e.g., update calendar). The service codelets can dynamically call other service codelets based on the results of their requests for information. The information from the services is integrated and returned to the user.

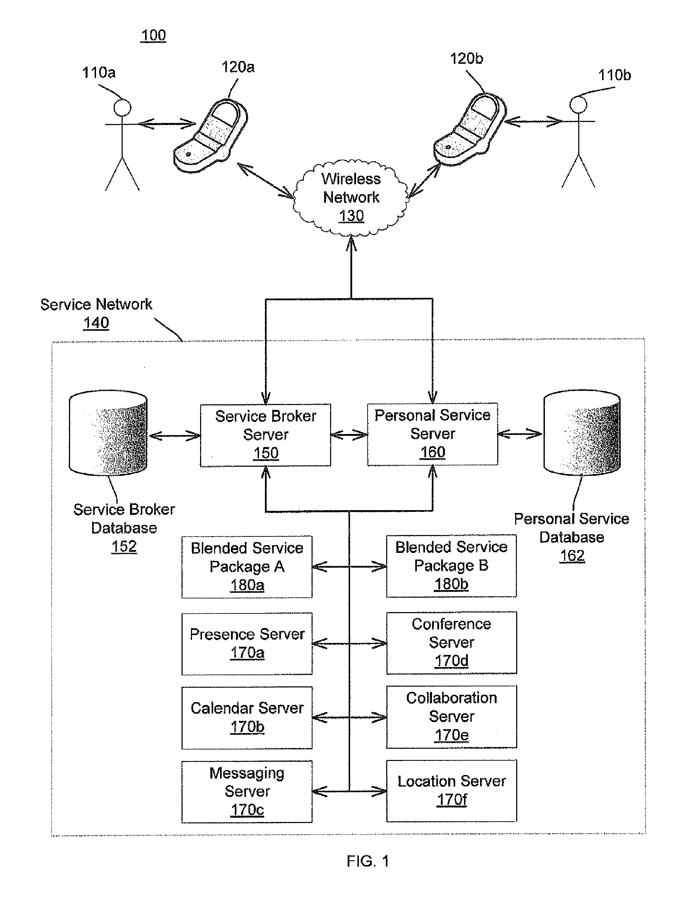

FIG. 1 is a functional block diagram of an exemplary system 100 illustrating service integration on a network. A user 110a or 110b (generally 110) utilizing a computing device 120a or 120b (generally 120) accesses a service network 140 through a network 130. The service network 140 includes a service broker server 150, a personal service server 160, a service broker database 152, a personal service database 162, blended service package A 180a, blended service package B 180b, and service servers (e.g., 170a). The service servers (e.g., 170a) include a presence server 170a, a calendar server 170b, an messaging server 170c, a conference server 170d, a collaboration server 170e, and a location server 170f.

In some examples, the computing device 120 is a cell phone, a computer, a television with set top box, other types of display devices with input devices, and/or other types of audio devices with audio input devices. Although the exemplary network 130 is a wireless network, the network 130 can be, for example, a wired network, a cable television network, a computer network, a packet based network (e.g., using IP), an asynchronous transfer mode (ATM) network, and/or a circuit based network, including a landline telephone network, a cellular network, a personal communications service (PCS) network, a global system for mobile communication (GSM) network, an enhanced general packet radio service (EDGE) network, and/or other public switched telephone network (PSTN) type networks.

In other examples, the service broker server 150 resolves conflicts between blended services packages (e.g., 180a), prioritizes service packages (e.g., if the user 110 has subscribed to more than one service package), and/or performs resource management for the service servers. The service broker database 152 includes information associated with resource management (e.g., usage of service servers), user information (e.g., user subscriptions, user subscriptions to one or more service packages), and/or service network information (e.g., communication paths to service servers).

In some examples, the service servers (e.g., 170a) include other types of servers associated with services for users (e.g., 110a), and/or other types of servers associated with services for networks (e.g., 130). The service servers (e.g., 170a) can be, for example, a presence server, a calendar server, a messaging server, a conference server, a collaboration server, a location server, a personalization server, an electronic mail server, a business communication server, a phone server, a voicemail server, an internet television server, and/or a storage server.

In other examples, the service servers (e.g., 170a) include servers associated with IPTV capabilities, message conversion, presence status capabilities, calendar capabilities, message transmission and receiving capabilities, conference capabilities, location identification capabilities, social attribute identification capabilities, business communication capabilities, electronic mail capabilities, phone capabilities, voicemail capabilities, television capabilities, and/or storage capabilities. The IPTV capabilities include, for example, advertisement insertion, extracting user preferences from a content search application, and/or content searching. Another advantage is that the integration of the telecommunication capabilities provides for a synergistic combination of services to a user. Another advantage is that the integration of the telecommunications capabilities allows for capabilities to expand its services by combining information from other capabilities.

In other examples, the service servers include a personal service server 160. The personal service server 160 monitors user requests for services and stores the user requests in the personal service database 162. The personal service server 160 processes the stored user requests to determine usage patterns. The personal service server 160 processes the usage patterns to determine future requests (e.g., The personal service asks: Do you want to have dinner with your golf buddies on Friday night at the country club?) and/or to determine how to fulfill a request (e.g., You tell the personal service: Schedule dinner with my golf buddies on Friday night at our favorite restaurant.). The personal service server 160 processes the request by communicating with the service broker server 150, a blended service package (e.g., 180a), and/or one or more service servers (e.g., 170a).

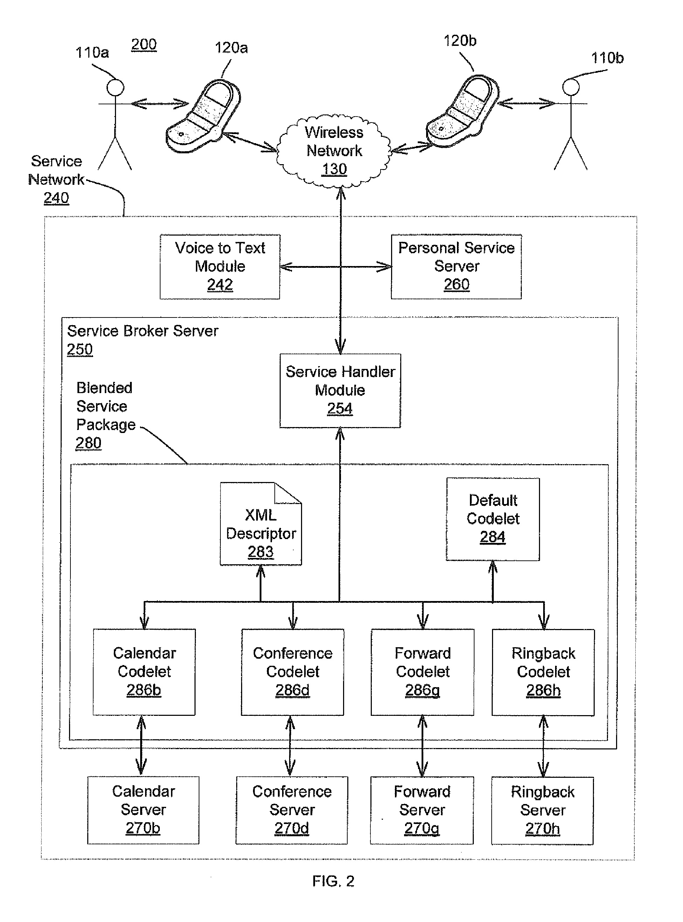

FIG. 2 is a functional block diagram of an exemplary system 200 illustrating a blended service package 280 providing service integration on a network 130. A user 110a or 110b (generally 110) utilizing a computing device 120a or 120b (generally 120) accesses a service network 240 through a wireless network 130. The service network 240 includes a voice to text module 242, a personal service server 260, a service broker server 250, a calendar server 270b, a conference server 270d, and a location server 270f. The service broker server 250 includes a service handler module 254 and a blended service package 280. The blended service package 280 includes an XML descriptor file 283, a default codelet 284, a calendar codelet 286b, a conference codelet 286d, and a location codelet 286f.

The user 110 utilizing the computing device 120 makes a service request through the wireless network 130. The service handler module 254 receives the service request and calls a default codelet 284 associated with a blended service package 280 that is associated with the user 110.

In some examples, the service handler module 254 dynamically calls a plurality of service codelets (e.g., 286b) that are needed to fulfill the user's request. Each called service codelet (e.g., 286b) communicates with a service server (e.g., 270b) to receive, update, and/or add information associated with the user request. The service codelet (e.g., 286b) returns information associated with the request to the service codelet (e.g., 286b) which communicates the information to the service handler module 254.

In other examples, the default codelet 284 dynamically calls a plurality of service codelets (e.g., 286b) that are needed to fulfill the user's request. Each called service codelet (e.g., 286b) communicates with a service server (e.g., 270b) to receive, update, and/or add information associated with the user request. The service codelet (e.g., 286b) returns information associated with the request to the service codelet (e.g., 286b) which communicates the information to the default codelet 284.

For example, a first user 110a sets her preferences up to forward all phone calls to her office phone to her cell phone 120a and to have a personalized ringback for phone calls from certain numbers (e.g., her mother). A second user 110b (e.g., the first user's mother) utilizing her cell phone 120b makes a request through the network 130. The service broker server 250 receives the request from the second user 110b to establish a phone call to the first user's office phone. The service broker server 250 calls a default codelet 284 associated with the blended service package 280 associated with the first user 110a. Based on the first user preferences, the default codelet 284 calls the forward codelet 286f. The forward codelet 286f communicates with a phone call forwarding server 270f to forward the phone call from the first user's office phone to the first user's cell phone 120a. The forward codelet 286f calls the ringback codelet 286h based on the first user's preferences. The ringback codelet 286h communicates with a ringback phone server 270h to check to determine if the phone call is from a number listed in the first user's preferences. If the phone call is from a number listed in the first user's preferences, then the ringback codelet 286h requests that the ringback phone server 270h supply the specified ringback for use in the telephone call. The phone call is connected to the first user's cell phone 120a with the specified ringback.

In other examples, the service handler module 254 maintains availability information, resource utilization, and/or load information for each of the service servers (e.g., 270b). In some examples, the service handler module 254 provides exception handling software as described below. The service handler module 254 can determine, for example, an alternative service server if the selected service server is unavailable. For example, if the calendar service 270b is unavailable, then the service handler module 254 instructs the blended service package 280 to contact the presence server for an individual's location information. For example, if a first calendar server 270b is unavailable, then the service handler module 254 instructs the blended service package 280 to contact a second calendar server (not shown) for the calendar information.

In other examples, the service handler module 254 load balances user requests for services across a plurality of service servers associated with the information for the user request. The load balancing by the service handler module 254 can utilize, for example, the number of active sessions to the service servers, the status of the service servers (e.g., heartbeat mechanism), and/or the timestamp of last access for the service servers.

In some examples, the blended service package 280 is determined based on the user's preferences, a service package associated with the user, and/or other configuration information associated with the user. A user can be, for example, associated with one or more blended service packages (e.g., 280). For example, a user can be associated with a corporate blended service package which provides business type services (e.g., messaging, phone forwarding, calendar) and a personal blended service package which provides personal type services (e.g., ringback, social attributes). If the user made a request for a meeting with her boss at 3:00pm on a Monday, then based on configuration data associated with the service package (e.g., business hours are Monday through Friday 8:00am to 5:00pm) the corporate blended service package would be utilized for the user request. If the user made a request for dinner reservations for four at 8:00pm on a Saturday, then based on the user's preferences (e.g., all reservations on the weekend are personal) the personal blended service package would be utilized.

The service handler module 254 dynamically calls, for example, the service codelets (e.g., 286b) associated with the blended service package 280. The service codelets (e.g., 286b) called by the service handler module 254 can be, for example, associated with a user 110, a set of users, all users, a user's service package, and/or as a service network framework. Although FIG. 2 illustrates each service codelet (e.g., 286b) communicating with one service server (e.g., 286b), each service codelet (e.g., 286b) can communicate, for example, with a plurality of service servers (e.g., 270b and 270d).

The service handler module 254 can generate, for example, a list of service codelets (e.g., calendar codelet, conference codelet, presence codelet). The list of service codelets can be, for example, generated dynamically based on user information, service network information, information associated with the user request, and/or other information associated with the services. The list of service codelets can be utilized, for example, to ensure that the called service codelets return information (e.g., contact information), access information in a designated order (e.g., first retrieve the boss's schedule and then retrieve the subordinate schedules), complete assigned tasks (e.g., update calendar entry), and/or complete assigned tasks in a designated order (e.g., first check calendar and then make dinner reservations).

For example, a first user 110a wants to set up a conference with a second user 110b and a third user (not shown) as soon as possible. The first user 110a utilizing his cell phone 120a dials the second user 110b and the third user's office numbers. The service broker server 250 receives the call. The service broker server 250 communicates with the service handler module 254 to initiate the conference call. The service handler module 254 calls a blended service package (e.g., 280) selected from a plurality of blended service packages. The service handler module 254 calls the default codelet 284 associated with the blended service package 280. The service handler module 254 generates a list of service codelets based on information associated with the first user 110a (e.g., service package subscription). Table 1 illustrates an example of the list of service codelets which includes the conference codelet 286d. Based on the list of service codelets, the service handler module 254 calls the conference codelet 286d which communicates with the conference server 270d to determine what information is needed to setup the requested conference call. Based on the information from the conference server 270d, the conference codelet 286d adds the presence codelet to the list of service codelets as illustrated in table 2.

**Table 1. List of Service Codelets**

| **List of Service Codelets** |
|---|
| Conference Codelet |
| |
| |
| |

**Table 2. List of Service Codelets**

| **List of Service Codelets** |
|---|
| Presence Codelet |
| Conference Codelet |
| |
| |

The service handler module 254 calls the presence codelet. The presence codelet communicates with the presence server (not shown) to determine the second user 110b and third user's location. The presence server responds to the service handler module 254 that the second user 110b is available via his cell phone 120a and that the third user is out of cell phone range. The presence codelet adds the message codelet (not shown) to the list of service codelets. Upon returning the second user 110b and third user information to the service handler module 254, the presence codelet is removed from the list of service codelets as illustrated by table 3.

**Table 3. List of Service Codelets**

| **List of Service Codelets** |
|---|
| Message Codelet |
| Conference Codelet |
| |
| |

The service handler module 254 calls the message codelet. The message codelet communicates with the message server (not shown) to send a message to the third user that that the first user 110a wants to have a conference call as soon as possible. The third user communicates to the message server to call a phone number at the third user's location for the conference call. The message server communicates the phone number for the third user to the service handler module 254. Upon returning the third user information to the service handler module 254, the message codelet is removed from the list of service codelets as illustrated in table 4.

**Table 4. List of Service Codelets**

| **List of Service Codelets** |
|---|
| Conference Codelet |
| |
| |
| |

The service handler module 254 calls the conference codelet 286d and sends the second user 110b and third user information. The conference codelet 286d calls the conference server 270d which dials the second user's cell phone 120b number and the telephone number provided by the third user to complete the first user's conference call request. Upon completion of the setup of the conference call in response to the first user's request, the conference codelet 286d is removed from the list of service codelets. Since the list of service codelets is empty (as illustrated in table 5) and the user request is complete, the service handler module 254 returns to the service broker server 250.

**Table 5. List of Service Codelets**

| **List of Service Codelets** |
|---|
| |
| |
| |
| |

In some examples, the list of service codelets is the execution sequence for the calling of the service codelets (e.g., 286d). The execution sequence can be modified, for example, by the service codelets based on the information requested and/or received from the service servers. The modification of the execution sequence can include, for example, the deletion, addition, and/or reordering of entries (e.g., message codelet inserted before conference codelet). The execution sequence can be modified, for example, based on the load of the service server (e.g., 90% CPU utilization), the capability of the service server (e.g., instant messaging but no email), time, user's location information, user's presence information, user's registration, network policies, and/or user preferences (e.g., no calls between 6pm-8pm). An advantage is that the service codelets can dynamically modify the sequence of service codelet execution based on information associated with the service servers.

The service handler module 254 can define, for example, a predetermined grouping of service codelets (e.g., 286h). The predetermined grouping of service codelets can be, for example, utilized for predetermined user requests (e.g., phone forwarding utilizes the presence codelet and the forward codelet 286g). The service codelets (e.g., 286b) can be, for example, associated with the blended service package 280 based on the user's preferences, a blended service package 280 associated with the user 110, and/or other configuration information associated with the user 110.

In other examples, the XML descriptor file 283 includes information defining when to call the default codelet 284. The XML descriptor file 283 can include, for example, information defining when to call one or more of the service codelets (e.g., 286b) at runtime. For example, the XML descriptor file 283 includes information that when a user 110 makes a request for dinner reservations with a second person that the service handler module 254 calls the calendar codelet 286b first to determine if the second person is available for dinner, then calls the presence codelet (not shown) to determine how to contact the second person, and then calls the messaging codelet (not shown) to communicate with the second person about whether they would like to join the user 110 for dinner.

In some examples, the service handler module 254 dynamically calls the service codelets (e.g., 286b) to request information from the associated services (e.g., calendar data) and/or perform tasks with the associated services (e.g., update calendar). In other examples, the service codelets (e.g., 286b) can dynamically call other service codelets (e.g., 286d) based on the results of their requests for information. For example, the conference codelet 286d receives calendar information from the calendar codelet 286b that a party for a conference call is out of town. Based on the calendar information that the party is out of town, the conference codelet 286d calls the presence codelet (not shown) to determine where the party is located and how to contact the party. The presence codelet communicates presence information back to the conference codelet 286d regarding how to contact the party for the conference call.

In other examples, new services can be added to the service network 240 by creating new service codelets (e.g., 286b) that interact with the new service. New service codelets (e.g., 286b) can be, for example, created for existing services (e.g., calendar service) to allow for different types of access to the information associated with the service. For example, a first calendar codelet can be utilized to check on calendar availability and a second calendar codelet can be utilized to schedule meetings. The first calendar codelet and the second calendar codelet both can access, for example, the same calendar server. An additional advantage to the integration of services on a network is that an existing service can be added into an integration of services without modifying the existing services by utilizing the ability to request information from the existing services and/or perform tasks with the existing services. Another advantage is that the ability to add, delete, and/or modify the services that are available for integration on a network allows for services to be quickly and efficiently integrated into other services on a network.

In some examples, the information from the services (e.g., conference, calendar, presence) is integrated together and returned to the user 110. A service codelet (e.g., 286b) can call, for example, one or more other service codelets (e.g., 286d) to complete a task for a user. For example, the conference codelet 286d calls the calendar codelet 286b to determine if the individuals for a conference call are available. Another advantage is that service codelets can be chained together so that multiple services can act on the same user request.

In other examples, the service codelets (e.g., 286b) are reentrant software. The service codelets (e.g., 286b) can be, for example, multi-threaded software. The service codelets (e.g., 286b) can be, for example, a Java class file, a Java bytecode file, executable files loaded at runtime, and/or platform independent executable files. An advantage is that the service codelet can be defined and deployed at runtime.

In some examples, the voice to text module 242 receives audio requests from the user 110 and converts the audio requests to non-audio requests (e.g., text). An advantage is that different types of requests can be utilized by the service network to provide integrated services to users.

In some examples, the service handler module 254 includes exception handling software. The exception handling software can receive, for example, timeout information from called service codelets (e.g., 286g) that are associated with the service servers (e.g., 270b). In other examples, the timeout information is information from a service server (e.g., 270b) that it is unable to process the request and /or other types of information that indicates that a request cannot be processed within a predetermined or dynamically generated time period.

For example, the exception handling software monitors a request from the service handler module 254 to the calendar codelet 286b for information from the calendar server 270b. If a response is not received within a predetermined amount of time (e.g., one second, ten seconds), then the exception handling software stops the default codelet 284 from calling the next service codelet (e.g., 286h) that is scheduled and calls an exception handling codelet (not shown). The exception handling codelet contacts a second calendar server (not shown) to determine if it is available. If the second calendar server is available, then the exception handling codelet communicates with the second calendar server to process the request. After the response is received, then the exception handling codelet returns control of the processing to the service handler module 254.

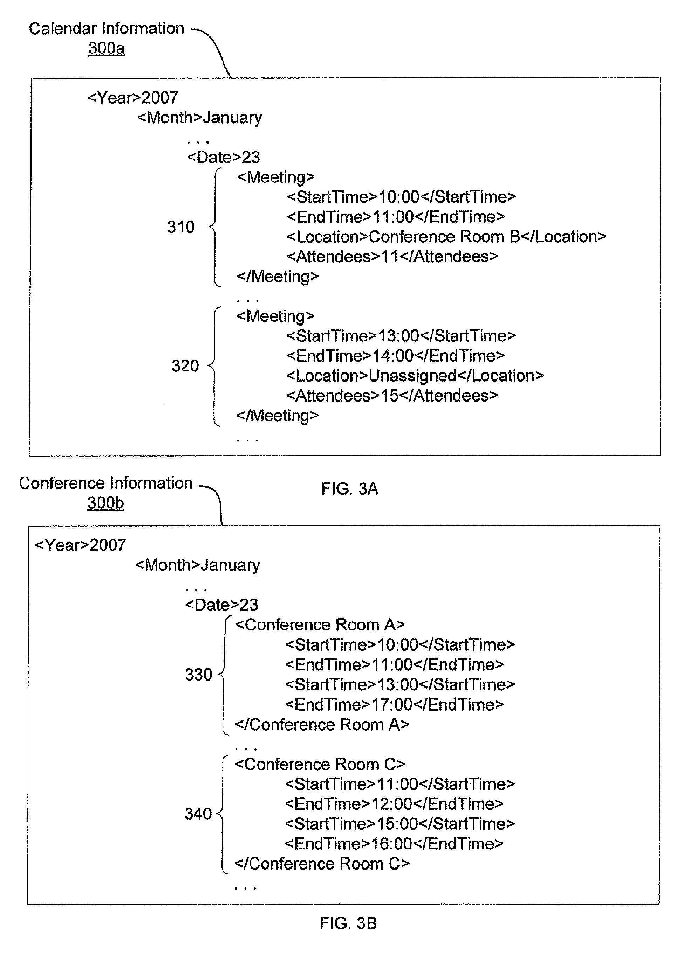

FIG. 3A is a diagram of exemplary calendar data 300a. The calendar information 300a includes calendar information for meetings 310 and 320. The calendar information for meetings 310 and 320 includes start time, end time, location, and number of attendees for the meeting.

FIG. 3B is a diagram of exemplary conference information 300b. The conference information 300b includes conference room information for conference room A 330 and conference room C 340. The conference room information 330 and 340 includes start times and end times for meetings scheduled in the conference room.

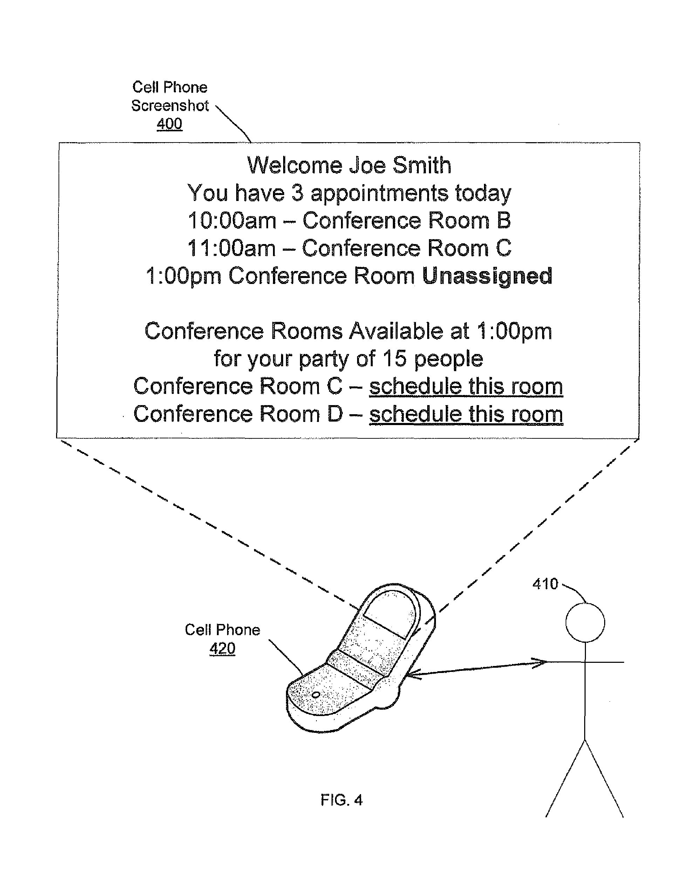

FIG. 4 is a exemplary screenshot 400 of information illustrating an interaction between a user 410 and a service broker server 250 through the exemplary system 200 of FIG. 2 using the calendar information 300a of FIG. 3A and the conference information 300b of FIG. 3B. A user 410 sets his preferences up for his cell phone 420 to display his schedule for the day (e.g., *10:00am ― Conference Room B*) and if any of his appointments are missing locations (e.g., *1:00pm Conference Room **Unassigned***)*,* to find available locations for the meeting (e.g., *Conference Room C - schedule this room*). The user 410 utilizes his cell phone 420 to view his appointments for the day as illustrated by the cell phone screenshot 400. The cell phone 420 requests the user's appointment information from the service broker server 250. The service broker server 250 calls a default codelet 284 associated with a blended service package 280 associated with the user 410. The default codelet 284 calls a calendar codelet 286b based on the user's preferences for viewing his calendar. The calendar codelet 286b requests the user's calendar information from a calendar server 270b. The calendar information 300a includes meeting information 310 and 320.

The calendar server 270b returns the user's calendar information to the default codelet 284 through the calendar codelet 286b. The default codelet 284 processes the user's calendar information and determines that one of the user's appointments is missing a location (e.g., *<Location>Unassigned<*/*Location>*). Based on the user's preference for finding locations for his appointments, the default codelet 284 calls a conference codelet 286d. The conference codelet 286d requests conference information 300b from a conference server 270d regarding rooms that are available for the user's meeting. The conference server 270d returns the conference information 300b to the conference codelet 270d which returns the information to default codelet 284. The default codelet 284 processes the conference information 300b and sends the calendar information 300a along with the available locations for the appointment missing a location (e.g., *Conference Room C ― schedule this room*) back to the user's cell phone 420.

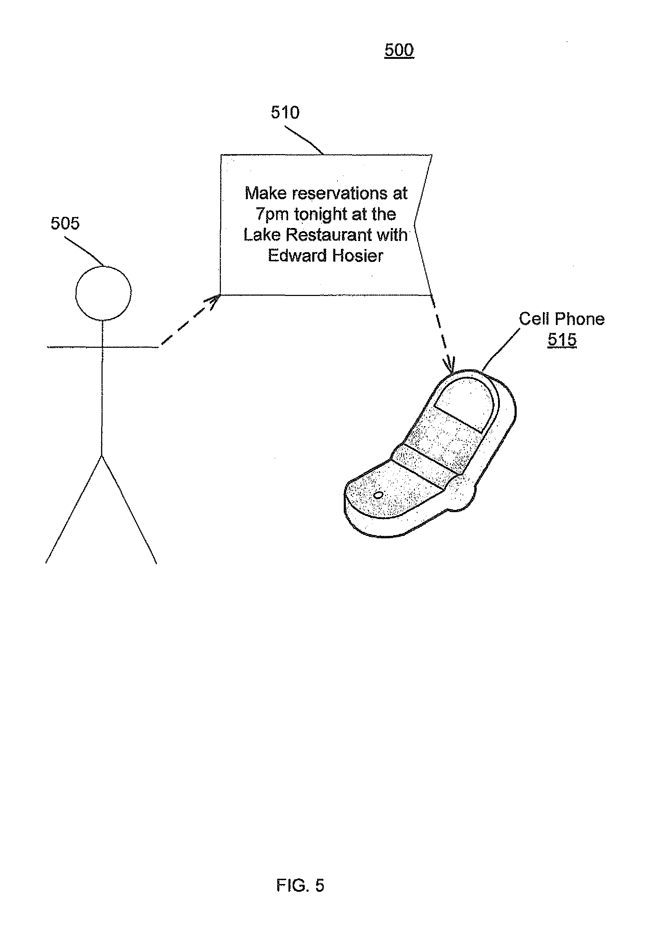

FIG. 5 is an exemplary diagram 500 illustrating an interaction between a user 505 and a cell phone 515 to place a request 510. The user 505 makes the request 510 through the cell phone 515 for reservations at 7 pm at the Lake Restaurant with Edward Hosier.

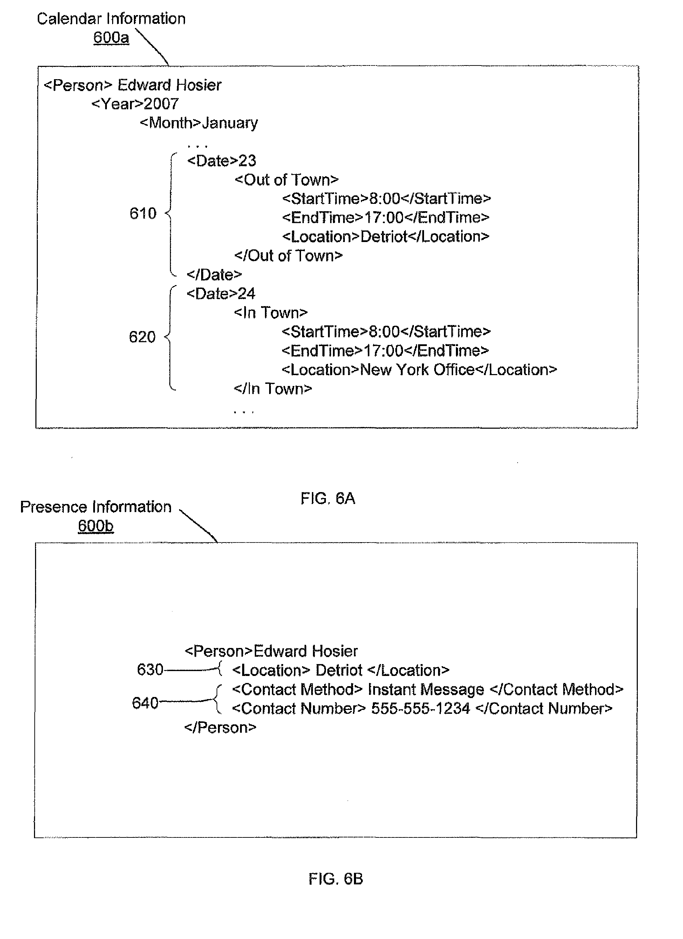

FIG. 6A is a diagram of exemplary calendar information 600a. The calendar information 600a includes out of town information 610 and in town information 620 associated with a person (e.g., Edward Hosier).

FIG. 6B is a diagram of exemplary presence information 600b. The presence information 600b includes the location 630 of a person (e.g., Edward Hosier) and how to contact 640 the person.

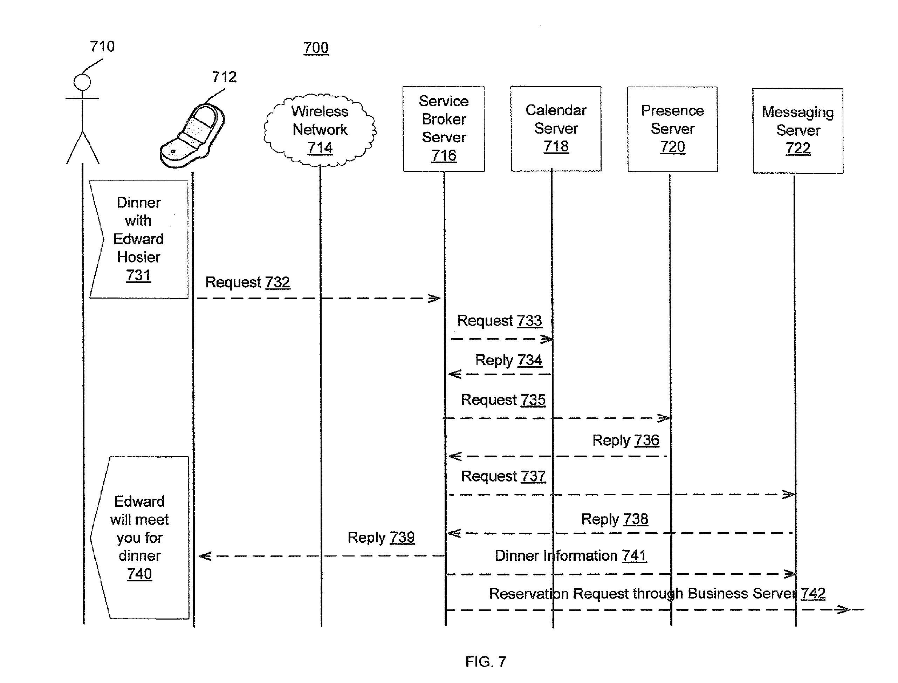

FIG. 7 is an exemplary process diagram 700 illustrating an interaction between a user 710 and a service network to place a request utilizing the calendar information 600a in FIG. 6A and presence information 600b in FIG. 6B. The user 710 makes a request 731 through a computing device 712 for reservations at 7pm tonight at the Lake Restaurant with Edward Hosier (as illustrated by the request 510 in FIG. 5). The computing device 712 communicates the request 732 to a service broker server 716 through a wireless network 714. The server broker server 716 processes the request 732 and communicates with the calendar server 718 via a request 733 and a reply 734 to receive calendar information 600a for Edward Hosier. The calendar information 600a for the day, January 23, 2007, of the exemplary request 731 indicates that Mr. Hosier is out of town. However, the end time for the out of town information 610 indicates that the out of town calendar entry ends at 5:00pm.

The server broker server 716 communicates with a presence server 720 via a request 735 and a reply 736 to access location information 630 and contact information 640 for Mr. Hosier. The server broker server 716 communicates with a messaging server 722 via a request 737 and a reply 738 utilizing the contact information 640 accessed from the presence server 720. The messaging server 722 communicates with Mr. Hosier via instant messaging to determine if Mr. Hosier would like to attend dinner with the user 710. Mr. Hosier responds to the messaging server 722 that he would like to attend dinner with the user 710. The server broker server 716 communicates a reply 739 to the user 710 through the computing device 712 indicating that "Edward will meet you for dinner" 740. The service broker server 716 communicates the dinner information 741 to Mr. Hosier through the messaging server 722. The service broker server 716 makes a reservation request 742 through a business server (not shown).

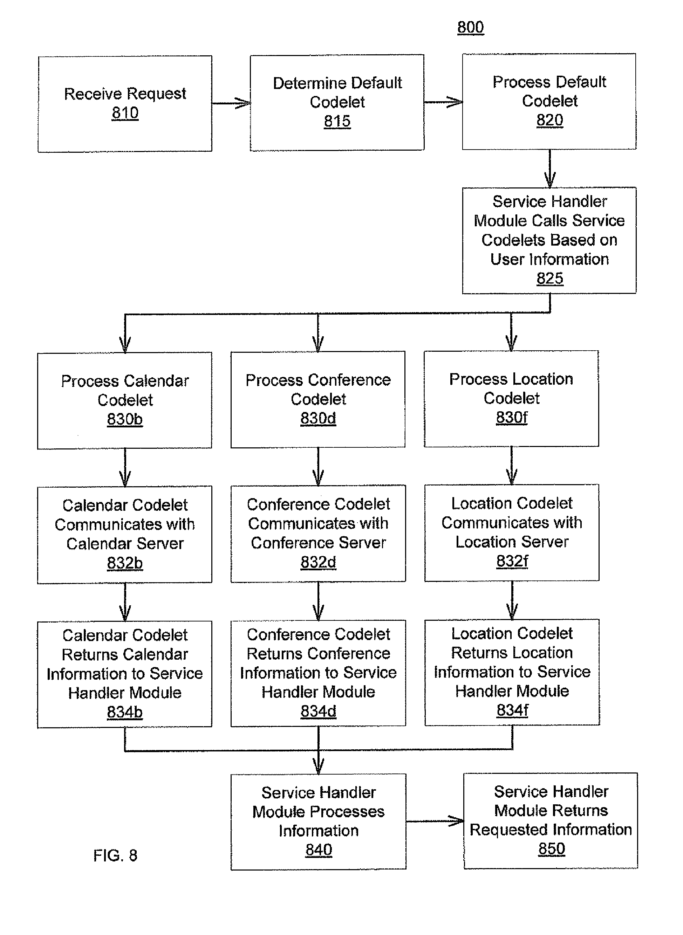

FIG. 8 is an exemplary flowchart 800 depicting processing of a default codelet 284 and service codelets (e.g., 286d) through the exemplary system 200 of FIG. 2. A service handler module 254 in a service broker server 250 receives (810) a request. The service handler module 254 determines (815) a default codelet 284 associated with a blended service package 280. The blended service package 280 can be, for example, associated with a user 110.

The default codelet 284 is processed (820) to determine which service codelets (e.g., 286b) to call to process the request. The service handler module 254 calls (825) a calendar codelet 286b, a conference codelet 286d, and a location codelet (not shown) based on information associated with the user. The calendar codelet 286b is processed (830b) to determine what information needs to be accessed. The calendar codelet 286b communicates (832b) with a calendar server 270b to access calendar information (e.g., a user's calendar for a certain day). The calendar codelet 286b returns (834b) the calendar information to the service handler module 254.

The conference codelet 286d is processed (830d) to determine what information needs to be accessed. The conference codelet 286d communicates (832d) with a conference server 270d to access the conference information (e.g., what conference rooms are available). The conference codelet 286d returns (834d) the conference information to the service handler module 254.

The location codelet (not shown) is processed (830f) to determine what information needs to be accessed. The location codelet communicates (832f) with a location server (not shown) to access location information (e.g., where an individual is). The location codelet returns (834f) the location information to the service handler module 254.

The service handler module 254 processes (840) the calendar information, the conference information, and the location information to integrate the information together for the user 110. The service handler module 254 returns (850) the integrated information to the user 110.

Although FIG. 8 illustrates the service codelets (e.g., 286b) operating in a parallel form, the service codelets (e.g., 286b) can be, for example, prioritized so that the processing and the communication occur in a selected order. The prioritization can be based, for example, on static information associated with the service network 240, dynamically generated information associated with the service network 240 (e.g., a set of service servers is unavailable), utilization of a service server, capability of a service server, time of request, user's location information, user's presence information, user's registration information, policies of the service network, and/or user's preferences. For example, the location codelet (not shown) is prioritized to be processed 830f first and then the calendar codelet 286b and the conference codelet 286d are processed 830b and 830d, respectively. Another advantage is that the sequence of the service codelets can be prioritized so that multiple services can effectively act on the same user request.

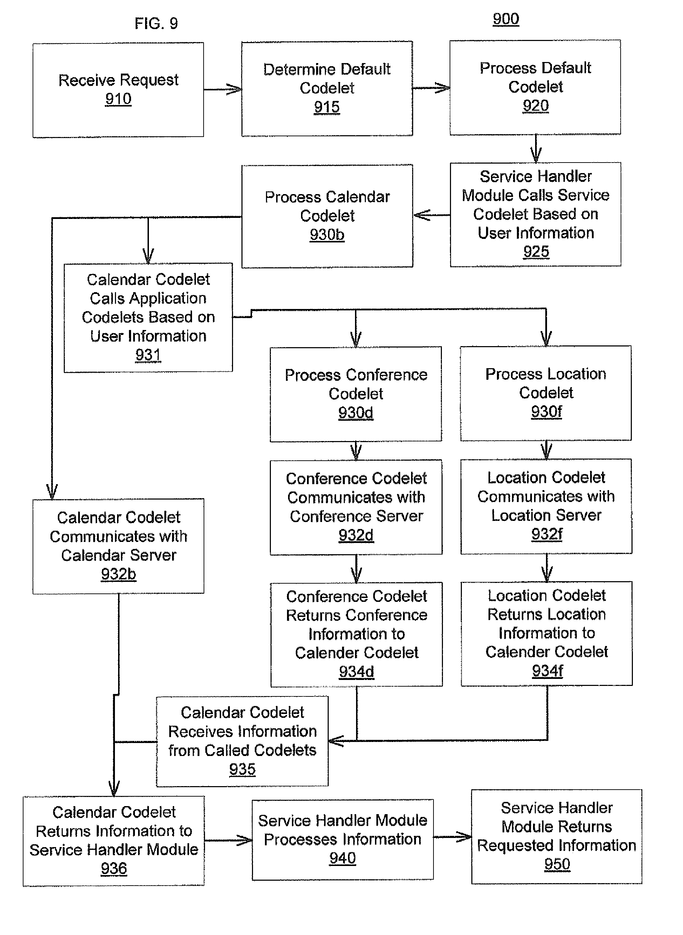

FIG. 9 is an exemplary flowchart 900 depicting processing of a default codelet 284 and service codelets (e.g., 286b) through the exemplary system 200 of FIG. 2. A service handler module 254 in a service broker server 250 receives (910) a request. The service handler module 254 determines (915) a default codelet 284 associated with a blended service package 280. The blended service package 280 can be, for example, associated with a user 110.

The default codelet 284 is processed (920) to determine which service codelets (e.g., 286b) to call to process the request. The service handler module 254 calls (925) a calendar codelet 286b based on information associated with the user. The calendar codelet 286b is processed (830b) to determine what information needs to be accessed. The calendar codelet 286b calls a conference codelet 286d and a location codelet (not shown) based on the user information and the request. The calendar codelet 286b communicates (932b) with a calendar server 270b to access calendar information (e.g., a user's calendar for a certain day).

The conference codelet 286d is processed (930d) to determine what information needs to be accessed. The conference codelet 286d communicates (932d) with a conference server 270d to access the conference information (e.g., what conference rooms are available). The conference codelet 286d returns (934d) the conference information to the calendar codelet 286b. The location codelet (not shown) is processed (930f) to determine what information needs to be accessed. The location codelet communicates (932f) with a location server (not shown) to access location information (e.g., where an individual is). The location codelet returns (934f) the location information to the calendar codelet 286b.

The calendar codelet 286b returns (936) the calendar information, the conference information, and the location information to the service handler module 254. The service handler module 254 processes (940) the calendar information, the conference information, and the location information to integrate the information together for the user 110. The service handler module 254 returns (950) the integrated information to the user 110.

As another general overview, a personal service monitors and stores user requests for services. The stored user requests are processed to determine usage patterns. The personal service processes the usage patterns to determine future requests (e.g., The personal service asks: Do you want to have dinner with your golf buddies on Friday night at the country club?) and/or to determine how to fulfill a request (e.g., You tell the personal service: Schedule dinner with my golf buddies on Friday night at our favorite restaurant.). The personal service processes the request.

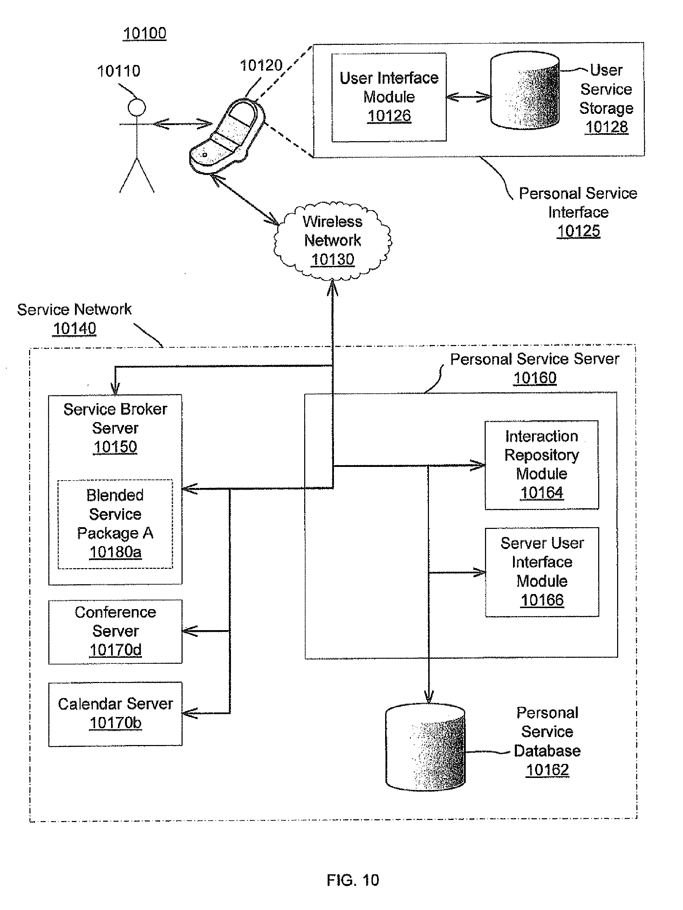

FIG. 10 is a functional block diagram of an exemplary system 10100 illustrating the interactions between a user 10110 and a personal service server 10160. The user 10110 utilizing a computing device 10120 accesses a service network 10140 through a wireless network 10130. The computing device 10120 includes a personal service interface 10125. The personal service interface 10125 includes a user interface module 10126 and a user service storage 10128. In some examples, the user interface module 10136 and the user service storage 10128 are part of the included user interface and storage of the computing device 10120.

The service network 10140 includes a service broker server 10150, a personal service server 10160, a personal service database 10162, and/or service servers 10170b and 10170d (generally 10170). The service broker server 10150 includes one or more blended service packages (e.g., 10180a). The personal service server 10160 includes an interaction repository module 10164 and a server user interface module 10166. The service servers 10170 include a presence server, a conference server 10170d, a calendar server 10170b, a collaboration server, an IM server, a location server, other types of servers associated with services for users, and/or other types of servers associated with services for networks. Another advantage is that different services can be integrated together to allow the personal service server to have a holistic view of the user's interactions which allows for a synergistic personal integration of services on the network that are configured for the user.

The user 10110 makes user requests by utilizing the personal service interface 10125 associated with the computing device 10120. The personal service interface 10125 monitors the user request and sends the user request to the server user interface module 10166 for processing. The personal service server 10160 processes the user request and returns information associated with and/or requested in the user request. The server user interface module 10166 monitors the user requests and stores the user requests in the personal service database 10162. The interaction repository module 10164 processes one or more stored user requests in the personal service database 10162 to determine one or more usage patterns.

In other examples, the server user interface module 10166 stores the usage patterns in the personal service database 10162. In some examples, the interaction repository module 10164 processes the usage patterns to determine future requests. The user interface module 10126 requests confirmation for the future request from the user 10110 through the user's computing devices 10120. Upon the user's confirmation for the future request, the personal service server 10160 processes the future user request.

In some examples, the user 10110 makes a user request by utilizing the personal service interface 10125 associated with the computing device 10120. The personal service server 10160 processes the user request. The processing by the personal service server 10160 includes processing the usage patterns to determine the parameters of the user request. Upon determining the parameters of the user request, the personal service server 10160 processes the user request.

In other examples, the server user interface module 10166 monitors the user requests and stores a set of the user requests in the personal service database 10162. The set of the user requests that are stored in the personal service database 10162 is determined based on the usage information stored in the personal service database 10162, user subscription information (e.g., personal subscription, corporate subscription), information associated with the service network 10140, usage patterns (e.g., conference scheduling, events), predetermined standard usage patterns, and/or other information that identifies usage patterns unique to a user 10110. Another advantage is that the personal service server processes the user requests, determines usage patterns, and processes usage patterns on the network side of the user transactions which allows.

In some examples, the user interface module 10126 monitors the user requests. The user interface module 10126 stores a set of the user requests in the user service storage 10128. The set of the user requests that are stored in the user service storage 10128 is determined based on the client side interactions of the user (e.g., favorites stored on the user's computing device), storage space on the user service storage 10128, and/or other information that is associated with user interactions with the computing device 10120. For example, the user favorites, local contacts, and/or other information that is not communicated to the personal service server 10160 is stored in the user service storage 10128. An advantage is that information that can not be monitored by the personal service server 10160 but can be monitored by the user interface module 10126 can be utilized to determine usage patterns for the user.

In other examples, the user interface module 10126 communicates with the server user interface module 10166 to communicate the user request information stored in the user service storage 10128 to the personal service database 10162. The communication of the user request information can be scheduled, for example, to occur on a predetermined, recurring basis (e.g., every hour, every twenty four hours). The user request information can be dynamically updated, for example, based on the amount of user request information stored in the personal service database 10162 (e.g., addition of 10 kilobytes of data, addition of 10 megabytes of data) and/or based on predetermined user interactions (e.g., addition of ten new contacts).

In some examples, the one or more services utilized to fulfill a user request are determined based the user's usage pattern. For example, the user's usage pattern indicates that the user has dinner with his golf buddies every Thursday night. Based on the user's usage pattern, the personal service server 10160 determines that that the calendar server 10170b and the message server should be utilized to fulfill the user's request. In other examples, the personal service server 10160 utilizes one or more blended service packages (e.g., 10180a) to determine the one or more services that are utilized based on the user's usage pattern.

In other examples, the processing of the user request by the personal service server 10160 includes determining one or more services that can be utilized to fulfill the user's request. For example, the user request is to setup a conference call with two people. Based on the user request, the personal service server 10160 determines that that the presence server and the conference server 10170d should be utilized to fulfill the user's request. In other examples, the personal service server 10160 utilizes one or more blended service packages (e.g., 10180a) to determine the one or more services that are utilized to fulfill the user's request.

In some examples, the personal service server 10160 communicates with the personal service database 10162 to determine the usage patterns of other users associated with the user's request. The personal service server 10160 can determine, for example, actions associated with the user's request based on the usage patterns and/or preferences of other users (e.g., automatically accept usage pattern for Ed's invitations, do not use usage patterns for Howard's invitations). For example, Bill invites his friend, Al, to dinner every Friday night and Al's acceptances of the dinner invitation are stored in the personal service database 10162. When Bill invites Al to dinner on Friday night, the personal service server 10160 communicates with the personal service database 10162 to determine the pattern for Al's acceptances of Bill's dinner invitation (e.g., always accepts, only accepts on the first Friday of the month). Based on Al's usage pattern, the personal service server 10160 can accept or reject Bill's dinner invitation (e.g., if Al only accepts on the first Friday of the month, then all dinner initiations on other Fridays are automatically rejected). An advantage is that the user's preferences and/or usage history can be utilized to customize the user interactions with the personal service server 10160.

The computing device 10120 can be, for example, a cell phone, a computer, a television with set top box, other types of display devices with input devices, and/or other types of audio devices with audio input devices. Another advantage is that a diverse set of user communication preferences and patterns from the various user computing devices can be combined to determine the usage patterns of the user.

Although a wireless network 10130 is illustrated in the exemplary system 10100, the wireless network 10130 can be, for example, a wired network, a cable television network, a computer network, a packet based network, an asynchronous transfer mode (ATM) network, and/or a circuit based network, including a landline telephone network, a cellular network, a personal communications service (PCS) network, a global system for mobile communication (GSM) network, an enhanced general packet radio service (EDGE) network, and other public switched telephone network (PSTN) type networks. Another advantage is that the personal service server can be implemented on different types of networks which allows for a plurality of forms of communication and interactions to be monitored and controlled by the personal service server.

In some examples, the service network 10140 is a carrier network. The carrier network can be, for example, a telephone network (e.g., public switched telephone network (PTSN)), a television network (e.g., satellite network, fiber optic network, coaxial cable network), a cell phone network (e.g., PCS network, GSM network), and/or any other type of network that provides services to users. Another advantage is that the personal service server is implemented on a carrier network which allows for a plurality of forms of communication and interactions to be monitored and controlled by the personal service server.

In some examples, the service is a message service, a presence status service, a calendar service, a message transmission and receiving service, a conference service, a location identification service, a social attribute identification service, a business communication service, an entertainment service, an information service, an electronic mail service, a phone service, a voicemail service, a television service, and/or a storage service. Another advantage is that the services can be integrated together to enable the personal service server to utilize information regarding the different services (e.g., message, presence, calendar, conference) to provide customized, personal service to the users of the personal service server.

In other examples, the user service storage 10128 is non-volatile memory or volatile memory. For example, the user service storage 10128 is a flash memory drive, a hard drive, and/or any other type of storage module. In some examples, the personal service database 10162 is stored in non-volatile memory or volatile memory. For example, the personal service database 10162 is stored on a hard drive, a network area storage device, and/or any other type of storage module.

The processing of the user requests by the personal service server 10160 includes utilizing a plurality of services 10170 and/or a service broker server 10150. In some examples, services 10170 (e.g., calendar, television, phone, location) on the service network 10140 are utilized by the personal service server 10160 to request information and/or perform tasks. In other examples, services 10170 on the service network 10140 are utilized by the service broker server 10150 and/or the blended service package 10180.

In other examples, the blended service package 10180 is a template that specifies the services that are available for use in the personal service integration. A blended service package can be selected, for example, from a plurality of blended service packages based on the user request and/or the usage pattern. The execution of the blended service package can be modified, for example, based on the user request and/or the usage pattern. For example, the usage pattern may indicate that a first user always calls a second user's cell phone and never calls the second user's office phone. When the first user calls the second user, the execution of the service codelets is modified so that the second user's location is not checked even though the selected blended service package by default checks every user's location before placing a call. In some examples, a blended service package is generated based on a usage pattern.

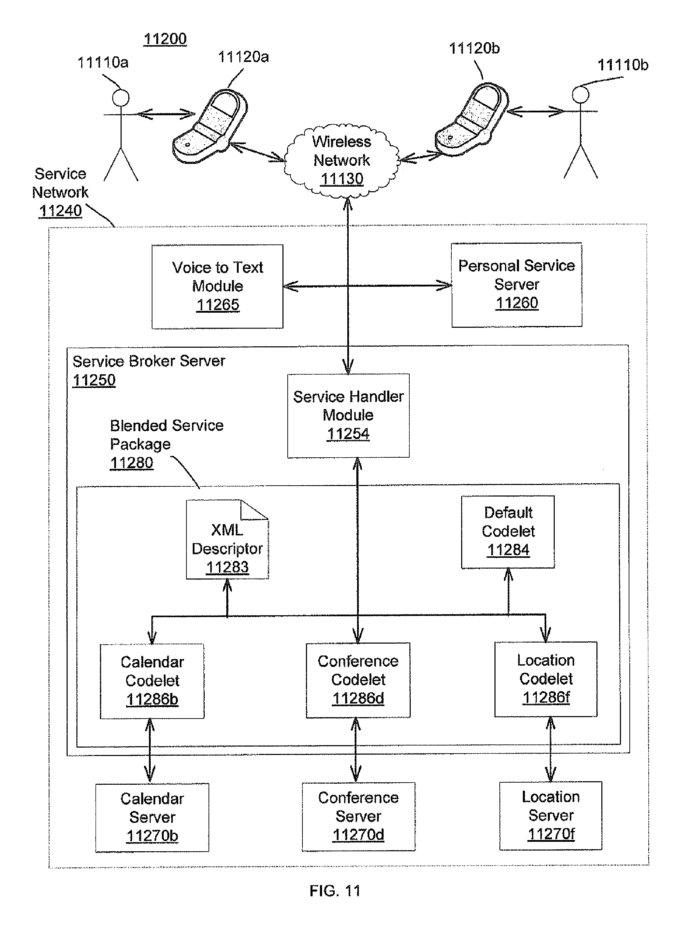

FIG. 11 is a functional block diagram of an exemplary system illustrating the interactions between users 11110a and 11110b (generally 11110) and a personal service server 11260. A user 11110 utilizing a computing device 11120a or 11120b (generally 11120) accesses a service network 11240 through a wireless network 10130. The service network 11240 includes a voice to text module 11265, a personal service server 11260, a service broker server 11250, a calendar server 11270b, a conference server 11270d, and a location server 11270f. The service broker server 11250 includes a service handler module 11254 and a blended service package 11280. The blended service package 11280 includes an XML descriptor file 11283, a default codelet 11284, a calendar codelet 11286b, a conference codelet 11286d, and a location codelet 11286f.

The user 110 utilizing the computing device 10120 makes a request through the wireless network 10130. The personal service server 11260 receives the request and communicates with the service handler module 11254. The service handler module 11254 receives the request and calls a default codelet 11284 associated with a blended service package 11280 that is associated with the user 10110. The service handler module 11254 dynamically calls a plurality of service codelets (e.g., 11286b) that are needed to fulfill the user's request. Each called service codelet (e.g., 11286b) communicates with a service server (e.g., 11270b) to receive, update, and/or add information associated with the user request.

The service codelet (e.g., 11286b) returns information associated with the request to the service codelet (e.g., 11286b) which communicates the information to the service handler module 11254. The service handler module 11254 returns the information associated with the request to the personal service server 11260. The personal service server 11260 processes the information and communicates with the user 10110.

Although FIG. 2 provides only one exemplary blended service package 11280, a plurality of blended service packages can be utilized, for example, by the service broker server 11250. A blended service package can be selected, for example, from the plurality of blended service packages based on the request, user preferences, information associated with the service network 11240, and/or information associated with the user 10110.

In some examples, the voice to text module 11265 receives audio requests (e.g., speech, audio, vocal, verbal communication) from the user 10110 and converts the audio requests to non-audio requests (e.g., text). An advantage is that different types of requests can be utilized by the service network 11240 to provide integrated services to users 10110. In other examples, an input module (not shown) receives requests from the user 10110 and processes the request. The processing includes, for example, handwriting recognition (e.g., converting handwriting to text based request) and/or text processing (e.g., optical character recognition, text parsing).

In some examples, the default codelet 11284 dynamically calls the service codelets (e.g., 11286b) to request information from the associated services (e.g., 11270d) (e.g., calendar data) and/or perform tasks with the associated services (e.g., 11270d) (e.g., update calendar). In other examples, the service codelets (e.g., 11286d) can dynamically call other service codelets (e.g., 11286f) based on the results of their requests for information. In yet other examples, the information from the services (e.g., 11270d) is integrated and returned to the user 10110.

In some examples, the blended service package 11280 is determined based on the user's preferences, a service package associated with the user, and/or other configuration information associated with the user. A user can be, for example, associated with one or more blended service packages (e.g., 11280). For example, a user can be associated with a corporate blended service package which provides business type services (e.g., messaging, phone forwarding, calendar) and a personal blended service package which provides personal type services (e.g., ringback, social attributes). If the user made a request for a meeting with her boss at 3:00 pm on a Monday, then based on configuration data associated with the service package (e.g., business hours are Monday through Friday 8:00 am to 5:00 pm) the corporate blended service package would be utilized for the user request. If the user made a request for dinner reservations for four at 8:00 pm on a Saturday, then based on the user's preferences (e.g., all reservations on the weekend are personal) the personal blended service package would be utilized. Another advantage is that the different blended service packages allow for a user to select default options, default actions, and/or service levels for the user's account.

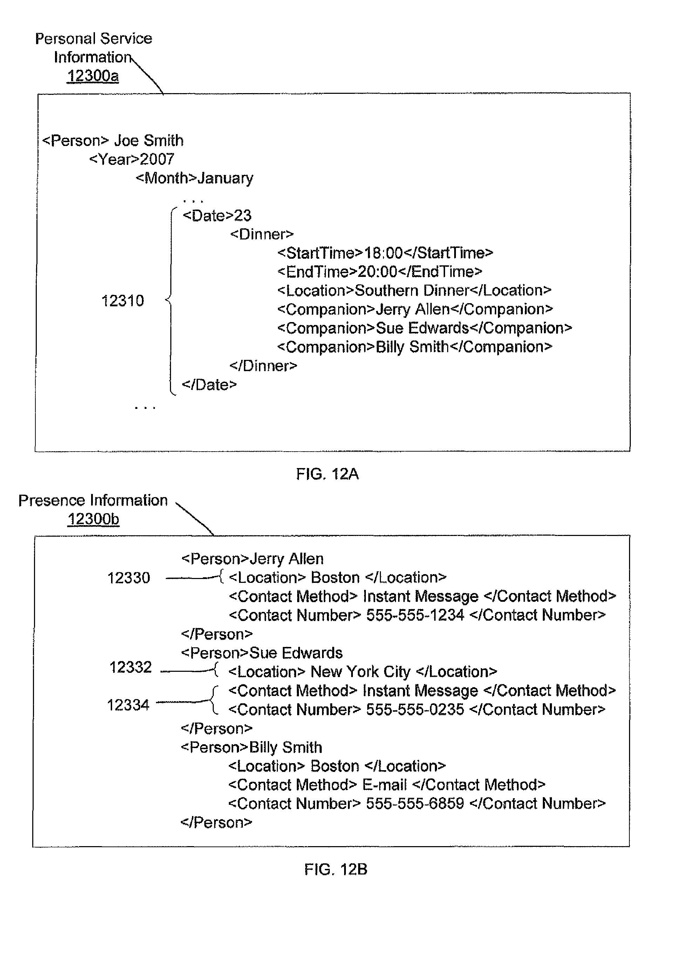

FIG. 12A is a diagram of exemplary personal service information 12300a. The personal service information 12300a includes information for dinner 12310. The calendar information for dinner 12310 includes start time, end time, location, and companions for the dinner.

FIG. 12B is a diagram of exemplary presence information 12300b. The presence information 12300b includes presence information for individuals. The presence information includes location information 1230 and 12332 and contact information 12334 for the individuals.

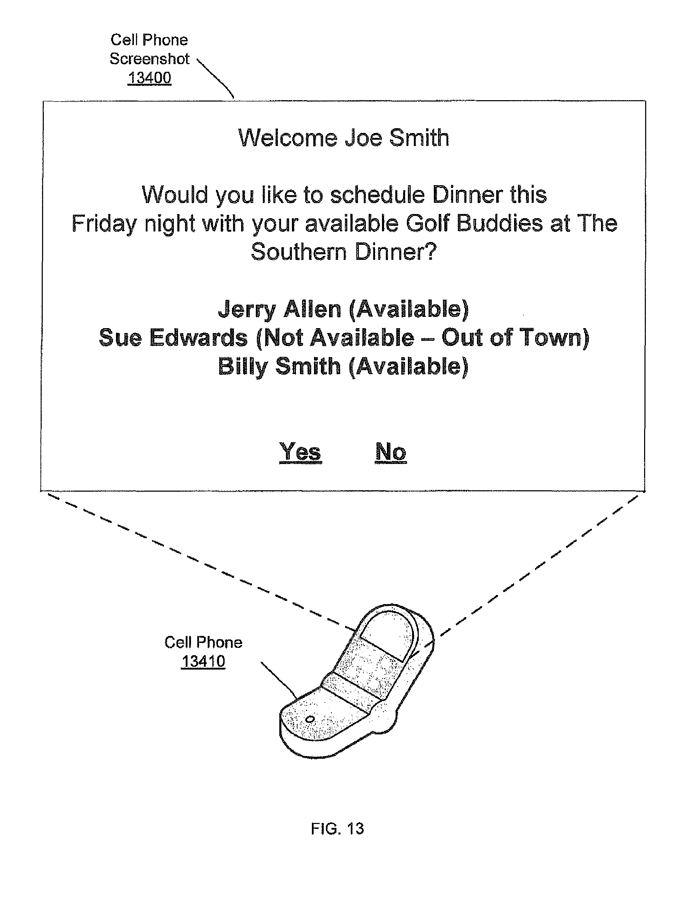

FIG. 13 is an exemplary screenshot 13400 illustrating the interaction between a user 10110 and a personal service server 10160 through the exemplary system 10100 of FIG. 10. The interaction repository module 10164 determines a future request based on the user requests stored in the personal service database 10162. The personal service server 160 communicates with the personal service interface 10125 on the user's computing device 10120 to determine if the user 10110 wants to proceed with the future request. Upon confirmation of the future request, the personal service server 10160 processes the future request through the service broker server 10150 or the service servers (e.g., 10170d).

For example, Joe Smith has dinner with his golf buddies every Friday night at the South End Country Club Restaurant at 7:15 pm. For the past four Thursdays, Joe has sent an instant message to his golf buddies, Jerry Allen, Sue Edwards, and Billy Smith, to ask if they want to have dinner on Friday. The golf buddies reply and Joe makes reservations at the South End Country Club Restaurant for 7:15 pm. Each of the previous user requests by Joe (e.g., instant messages, reservations) were monitored by the interaction repository module 10164 and the user requests were stored in the personal service database 10162. The interaction repository module 10164 processes the user requests to determine a usage pattern (e.g., dinner with golf buddies every Friday night). On the next Thursday, the personal service server 10160 processes the usage patterns stored in the personal service database 10162 and determines that Joe has dinner with his golf buddies every Friday night at 7:15 pm at the South End Country Club Restaurant. The personal service server 10160 communicates with a calendar server 10170b to determine if Joe's golf buddies are available. The personal service server 10160 asks Joe if he wants to have dinner with his golf buddies again on Friday night at 7:15 pm at the South End Country Club Restaurant. Joe replies to the query through his computing device 10120 (e.g., cell phone) with a "Yes." The personal service server 10160 communicates with the instant message server (not shown) to ask Joe's golf buddies if they want to have dinner on Friday. The personal service server 10160 communicates with a business server (not shown) to make reservations for Joe and his golf buddies at the South End Country Club Restaurant at 7:15 pm on Friday.

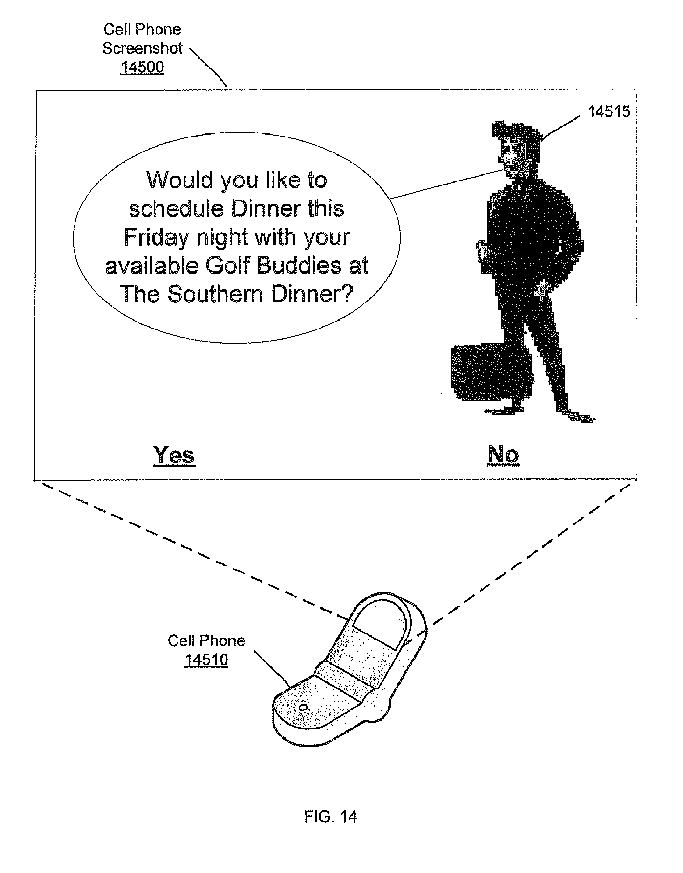

FIG. 14 is an exemplary screenshot 14500 illustrating the interaction between a user 10110 and a personal service server 10160 through the exemplary system 10100 of FIG. 10 utilizing a digital personal assistant through a cell phone 14510. The digital personal assistant is a graphical representation of the personal service interface 10125. In other examples, one user's digital personal assistant communicates with another user's digital personal assistant to process requests and/or make requests. In some examples, the digital personal assistant is a graphical representation 14515 of the personal service interface 10125 selected by the user 10110 from a library of graphical representations (e.g., dog, cat, animal, cartoon character). In other examples, the interaction between the user 10110 and the digital personal assistant includes receiving user requests and/or confirming future requests through a digital personal assistant module (not shown). In some examples, the digital personal assistant is a digital avatar which represents the user's identity, experience, and/or personality. An advantage is that the subscriber's communication, information sharing, and entertainment needs are customized based on the usage patterns of the user, the user's identity, experience, and/or personality.

In some examples, each user has a digital avatar that is personalized for the user. The personalization of the digital avatar includes determining the user's social attributes, preferences, and/or privacy settings. The digital avatar can be utilized, for example, across a plurality of computing devices (e.g., cell phone, computer). Another advantage is that the user will utilize the same user interface across a plurality of computing devices to blend speech recognition, rich animated graphics, and intelligence in the service network to manage the subscriber's complex, multidimensional interactions at the touch of a button and/or at an utterance of a command.

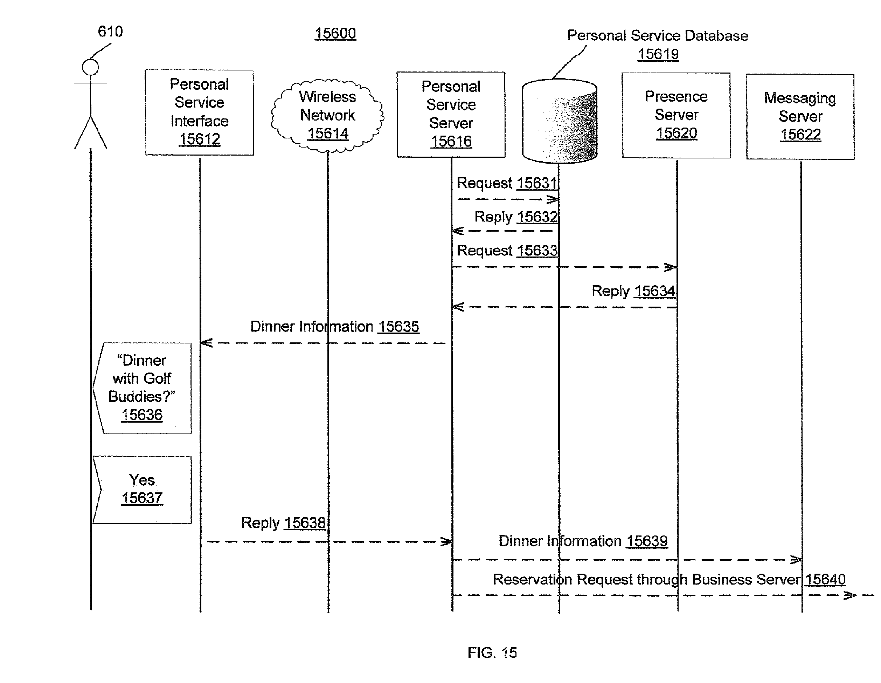

FIG. 15 is a process diagram 15600 illustrating the processing of a future request generated by a personal service server 15616 utilizing the personal service information 12300a in FIG. 12A and the presence information 12300b in FIG. 12B. The personal service server 15616 sends a request 15631 to the personal service database 15619 for personal service information 12300a associated with the user 15610. The personal service database 15619 replies 15632 with the personal service information 12300a associated with the user 15610 including the user's dinner information 12310. The personal service server 15616 determines a future request based on the personal service information 12300a. The personal service server 15616 requests 15633 presence information from a presence server 15620 for the individuals associated with the future request (e.g., Jerry Allen). The presence server 15620 replies 15634 with presence information 12300b for the individuals associated with the future request. The presence information 12300b includes location information 12330 and 12332 (e.g., New York City) and contact information 12334 (e.g., Instant Message).

The personal service server 15616 processes the presence information 12300b and communicates the dinner information 15635 (e.g., Dinner with Golf Buddies?) to the personal service interface 15612 on the user's computing device through a wireless network 15614. The personal service interface 15612 communicates the future request 15636 to the user 15610. The user 15610 responds 15637 ("Yes") to the inquiry regarding the future request 15636. The personal service interface 15612 replies 15638 to the personal service server 15616 through the wireless network 15614. The personal service server 15616 processes the reply from the user 15610 and communicates dinner information 15639 to the messaging server 15622. The messaging server 15622 communicates the dinner information to the individuals associated with the request based on the contact information (e.g., 12334) in the presence information 12300b. The personal service server 15616 communicates a reservation request 15640 to a business server (not shown) to place a reservation at the restaurant.

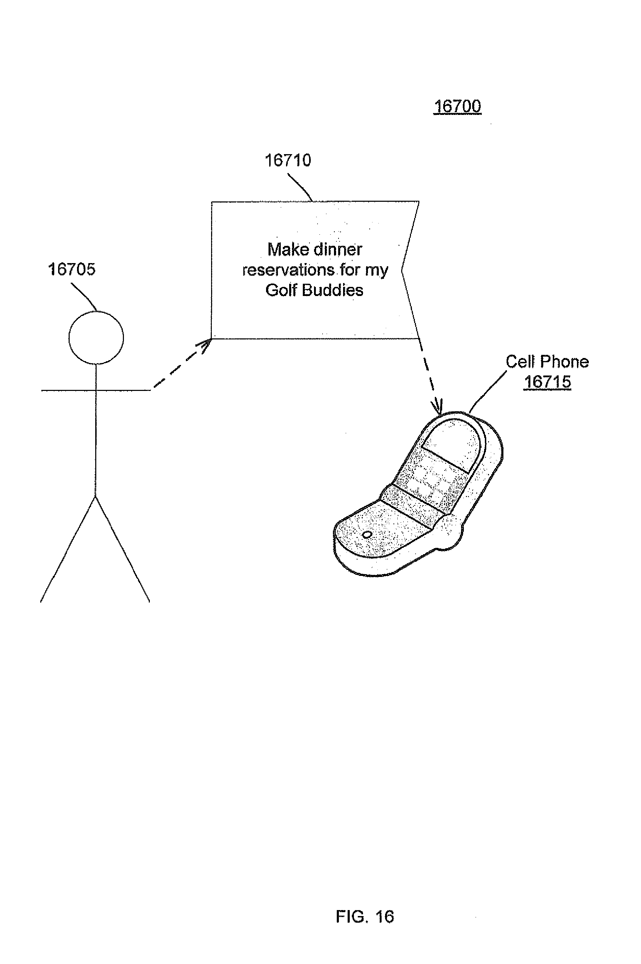

FIG. 16 is a diagram of an exemplary request 16710 by a user 16705. The user 16705 makes a request 16710 utilizing the user's cell phone 16715. The cell phone 16715 communicates through a wireless network 10130 to a personal service server 10160 to process the request of FIG. 10.

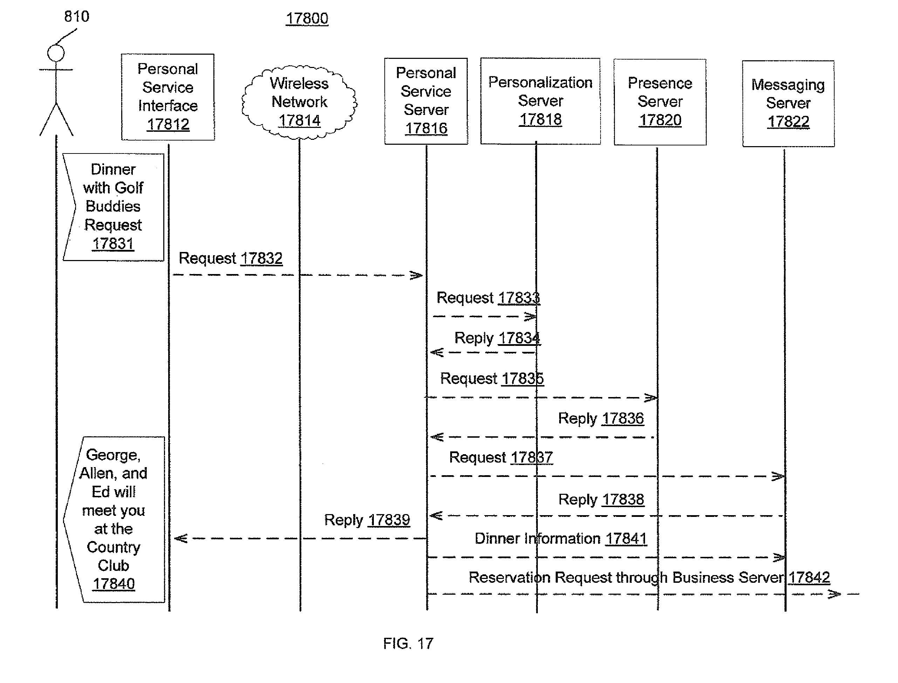

FIG. 17 is a process diagram 17800 illustrating the processing of a user request 17831. The user 17810 makes a request 17831 (e.g., Make dinner reservations with my Golf Buddies) using the personal service interface 17812 of the user's computing device (not shown). The personal service interface 17812 communicates the request 17832 through a wireless network 17814 to a personal service server 17816. The personal service server 17816 processes the request 17832 and makes a request 17833 to a personalization server 17818 to determine the user's golf buddies. The personalization server 17818 replies 17834 with the requested information regarding the user's golf buddies.

The personal service server 17816 requests 17835 presence information regarding the user's golf buddies from the presence server 17820. The presence server replies 17836 to the request with presence information (e.g., 12300b in FIG. 3B) for the user's golf buddies. Based on the presence information (e.g., who is in town, who is not in town), the personal service server 17816 communicates a request 17837 to a message server 17822. The message server 17822 communicates with the user's golf buddies who are available (e.g., in town) to determine if the user's golf buddies want to go to dinner. The messaging server 17822 replies 17838 to the personal service server 17816 with information regarding which of the user's golf buddies wants to go to dinner.

The personal service server 17816 replies 17839 to the user's request 17832 with the dinner information. The personal service interface 17812 communicates the reply 17840 (e.g., George, Allen, and Ed will meet you for dinner at the country club) to the user 17810 utilizing the user's computing device. The personal service server 17816 communicates the dinner information 17841 to the messaging server 17822. The message server 17822 communicates the dinner information 17841 to the user's golf buddies utilizing the contact information (e.g., 12334 in FIG. 12B) from the presence server 17820. The personal service server 17816 communicates a reservation request 17842 to a business server (not shown) to place a reservation at the restaurant.

For example, Joan Smith makes a user request 17831 utilizing the personal service interface 17812 on her cell phone to the service broker server 17816. The user request 17831 is to make dinner reservations for my golf buddies. The personal service server 17816 communicates 17833 with a personalization server 1781178 to request information regarding Joan's golf buddies, where Joan and her golf buddies go to dinner, and when Joan and her golf buddies go to dinner. The personalization server 17818 returns 17834 information regarding Joan's golf buddies (e.g., Jerry Allen, Sue Edwards, and Billy Smith), where they go to dinner (e.g., Country Club), and when they go to dinner (e.g., every Wednesday night at 6:45 pm). The personal service server 17816 communicates 17835 with the presence server 17820 to determine the location of Joan's golf buddies. The presence server 17820 returns 17836 information regarding the location and availability of Joan's golf buddies. The personal service server 17816 communicates with the messaging server 17822 to communicate with Joan's golf buddies to determine if they want to go with Joan to dinner. The personal service server 17816 sends a message 17839 to Joan to tell her the details regarding dinner with her golf buddies (e.g., Jerry, Sue, and Billy will join you for dinner Wednesday night at 6:45 pm at the Country club) and communicates 17841 with the messaging server 17822 to communicate to Joan's golf buddies the details regarding the dinner reservation. The personal service server 17816 sends a communication 17842 to a business server (not shown) to request reservations at the Country Club for four people on Wednesday night at 6:45 pm.

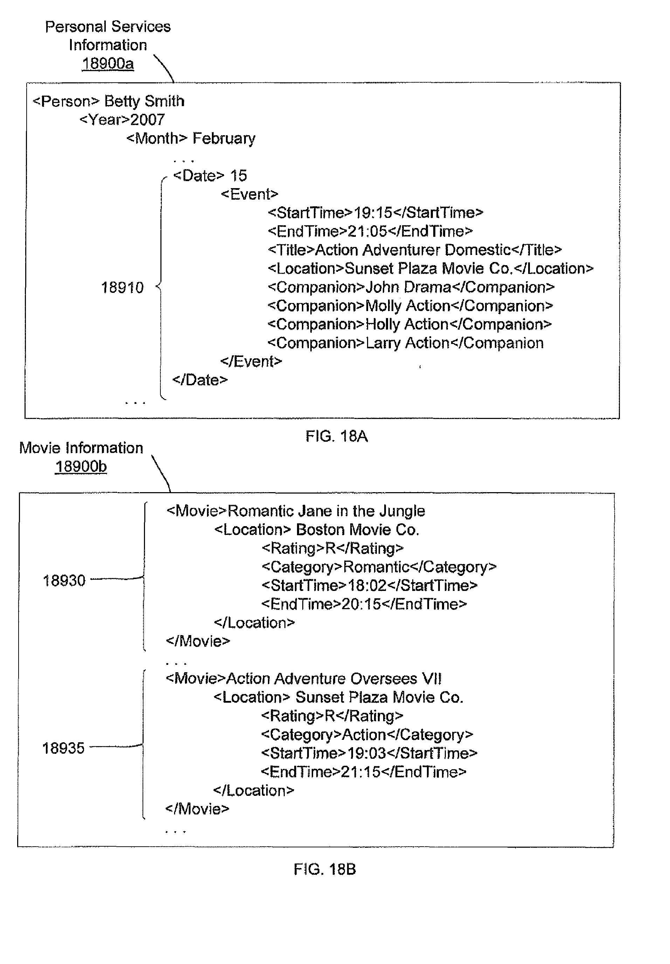

FIG. 18A is a diagram of exemplary personal services information 18900a. The personal services information 18900a includes event information 18910. The event information 18910 includes start time, end time, title, and/or companion information.

FIG. 18B is a diagram of exemplary movie information 18900b. The movie information 18900b includes individual movie information 18930 and 18935. The individual movie information 18930 and 18935 includes location, rating, category, start time, and/or end time.

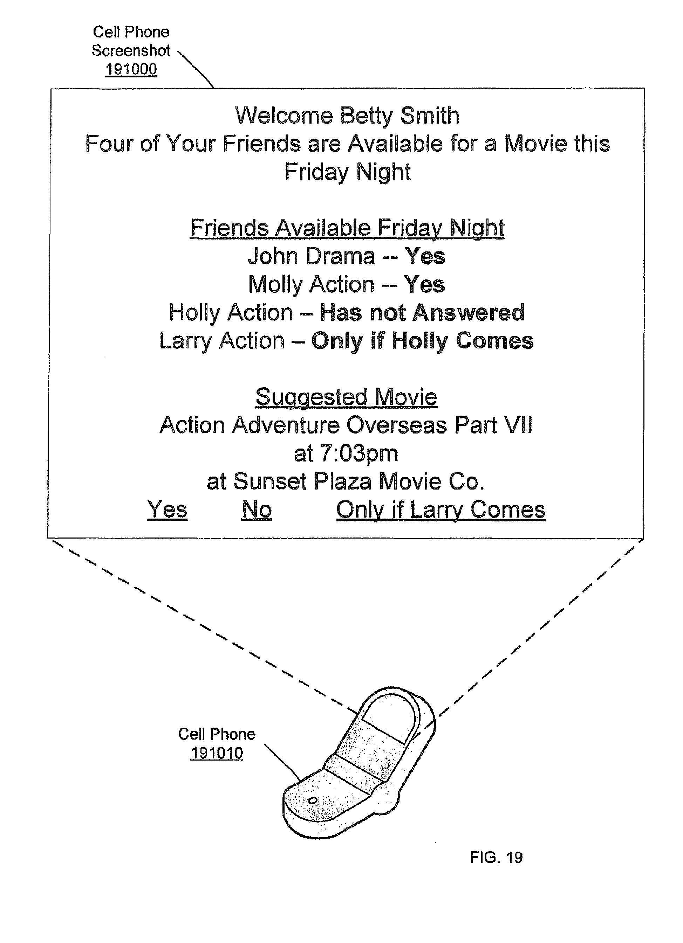

FIG. 19 is an exemplary screenshot 191000 illustrating the interaction between a user and a personal service server (not shown) through the user's cell phone 191010. The interaction includes information regarding a request (e.g., friends available Friday night, suggested movie).

In some examples, the personal service server communicates with the personal service database to determine the usage patterns of other users associated with the user's request. The personal service server can determine, for example, usage patterns and/or preferences of other users (e.g., Bill prefers horror movies, Al prefers action movies). For example, Bill invites his friend, Al, to a movie every Friday night and Al's acceptances of the movie invitations are stored in the personal service database. When Bill invites Al to an action movie on Friday night, the personal service server communicates with the personal service database to determine the pattern for Al's acceptances of Bill's movie invitation (e.g., always accept action movies, only accepts horror movies once a month). Based on Al's usage pattern, the personal service server can accept or reject Bill's movie invitation (e.g., accept Bill's movie invitation of an action movie).

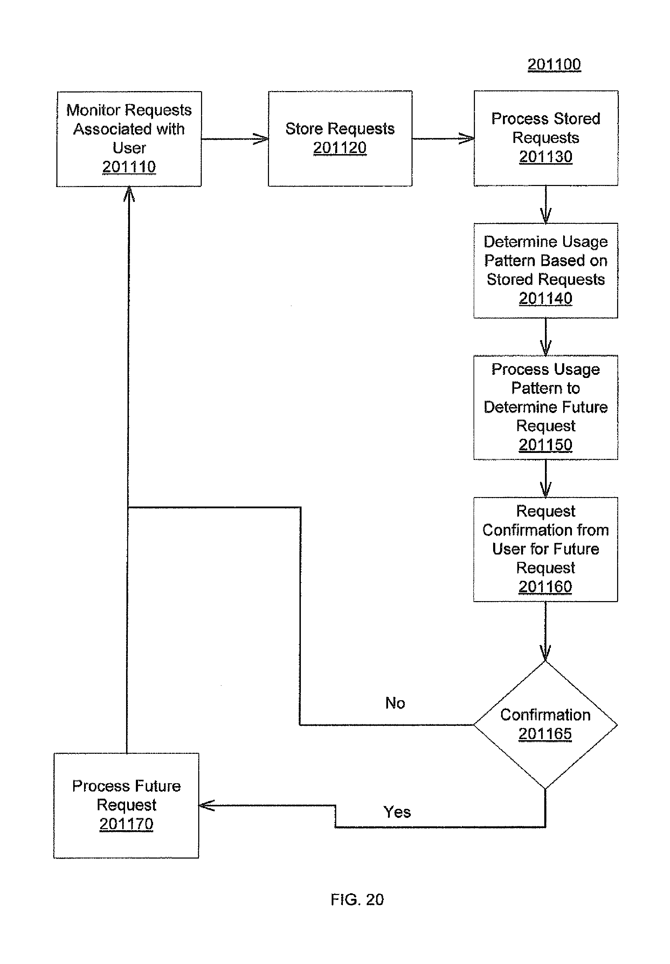

FIG. 20 is a flowchart diagram 201100 depicting generation of future requests for a user 10110 through the exemplary system 10100 of FIG. 10. The interaction repository module 10164 monitors (201110) requests associated with the user 10110. The requests are stored (201120) in the personal service database 10162. The interaction repository module 10164 processes (201130) the stored requests and determines (201140) one or more usage patterns based on the stored requests. The personal service server 10160 processes (201150) one or more of the usage patterns to determine a future request. The personal service interface 10125 communicates with the user 10110 through the user's computing device 10120 to confirm (201160) whether the user wants to process the future request. If the user 10110 confirms (201165) the future request, then the future request is processed (201170) by the personal service server 10160 and the interaction repository module 10164 monitors (201110) requests associated with the user 10110. If the user 10110 does not confirm (201165) the future request, then the interaction repository module 10164 monitors (201110) requests associated with the user 10110.

The above-described systems and methods can be implemented in digital electronic circuitry, in computer hardware, firmware, and/or software. The implementation can be as a computer program product (i.e., a computer program tangibly embodied in an information carrier). The implementation can, for example, be in a machine-readable storage device and/or in a propagated signal, for execution by, or to control the operation of, data processing apparatus. The implementation can, for example, be a programmable processor, a computer, and/or multiple computers.

A computer program can be written in any form of programming language, including compiled and/or interpreted languages, and the computer program can be deployed in any form, including as a stand-alone program or as a subroutine, element, and/or other unit suitable for use in a computing environment. A computer program can be deployed to be executed on one computer or on multiple computers at one site.

Method steps can be performed by one or more programmable processors executing a computer program to perform functions of the invention by operating on input data and generating output. Method steps can also be performed by and an apparatus can be implemented as special purpose logic circuitry. The circuitry can, for example, be a FPGA (field programmable gate array) and/or an ASIC (application-specific integrated circuit). Modules, subroutines, and software agents can refer to portions of the computer program, the processor, the special circuitry, software, and/or hardware that implements that functionality.

Processors suitable for the execution of a computer program include, by way of example, both general and special purpose microprocessors, and any one or more processors of any kind of digital computer. Generally, a processor receives instructions and data from a read-only memory or a random access memory or both. The essential elements of a computer are a processor for executing instructions and one or more memory devices for storing instructions and data. Generally, a computer can include, can be operatively coupled to receive data from and/or transfer data to one or more mass storage devices for storing data (e.g., magnetic, magneto-optical disks, or optical disks).

To provide for interaction with a user, the above described techniques can be implemented on a computer having a display device. The display device can, for example, be a cathode ray tube (CRT) and/or a liquid crystal display (LCD) monitor. The interaction with a user can, for example, be a display of information to the user and a keyboard and a pointing device (e.g., a mouse or a trackball) by which the user can provide input to the computer (e.g., interact with a user interface element). Other kinds of devices can be used to provide for interaction with a user. Other devices can, for example, be feedback provided to the user in any form of sensory feedback (e.g., visual feedback, auditory feedback, or tactile feedback). Input from the user can, for example, be received in any form, including acoustic, speech, and/or tactile input.

The system can include clients and servers. A client and a server are generally remote from each other and typically interact through a communication network. The relationship of client and server arises by virtue of computer programs running on the respective computers and having a client-server relationship to each other.

The above described techniques can be implemented in a distributed computing system that includes a back-end component. The back-end component can, for example, be a data server, a middleware component, and/or an application server. The above described techniques can be implemented in a distributing computing system that includes a front-end component. The front-end component can, for example, be a client computer having a graphical user interface, a Web browser through which a user can interact with an example implementation, and/or other graphical user interfaces for a transmitting device.

Data transmission and instructions can also occur over a communications network. Information carriers suitable for embodying computer program instructions and data include all forms of non-volatile memory, including by way of example semiconductor memory devices. The information carriers can, for example, be EPROM, EEPROM, flash memory devices, magnetic disks, internal hard disks, removable disks, magneto-optical disks, CD-ROM, and/or DVD-ROM disks. The processor and the memory can be supplemented by, and/or incorporated in special purpose logic circuitry.

The components of the system can be interconnected by any form or medium of digital data communication (e.g., a communication network). Examples of communication networks include a local area network (LAN), a wide area network (WAN), the Internet, wired networks, wireless networks, a packet-based network, and/or a circuit-based network.

Packet-based networks can include, for example, the Internet, a carrier internet protocol (IP) network (e.g., local area network (LAN), wide area network (WAN), campus area network (CAN), metropolitan area network (MAN), home area network (HAN)), a private IP network, an IP private branch exchange (IPBX), a wireless network (e.g., radio access network (RAN), 802.11 network, 802.16 network, general packet radio service (GPRS) network, HiperLAN), and/or other packet-based networks. Circuit-based networks can include, for example, the public switched telephone network (PSTN), a private branch exchange (PBX), a wireless network (e.g., RAN, bluetooth, code-division multiple access (CDMA) network, time division multiple access (TDMA) network, global system for mobile communications (GSM) network), and/or other circuit-based networks.

The computing device can include, for example, a computer, a computer with a browser device, a telephone, an IP phone, a mobile device (e.g., cellular phone, personal digital assistant (PDA) device, laptop computer, electronic mail device), and/or other communication devices. The browser device includes, for example, a computer (e.g., desktop computer, laptop computer) with a world wide web browser (e.g., Microsoft® Internet ExplorerⓇ available from Microsoft Corporation, MozillaⓇ Firefox available from Mozilla Corporation). The mobile computing device includes, for example, a Blackberry®.

Comprise, include, and/or plural forms of each are open ended and include the listed parts and can include additional parts that are not listed. And/or is open ended and includes one or more of the listed parts and combinations of the listed parts.

One skilled in the art will realize the invention may be embodied in other specific forms without departing from the spirit or essential characteristics thereof. The foregoing embodiments are therefore to be considered in all respects illustrative rather than limiting of the invention described herein. Scope of the invention is thus indicated by the appended claims, rather than by the foregoing description, and all changes that come within the meaning and range of equivalency of the claims are therefore intended to be embraced therein.

## Claims

1. A server implemented method for personal service integration on a network, the method comprising:
monitoring a plurality of telecommunication service requests associated with a user, wherein the telecommunication service requests are received over a carrier network and the telecommunication service requests are between the user and one or more people;
determining a first usage pattern for the user with the server based on the plurality of telecommunication service requests associated with the user;
determining one or more telecommunication services from a plurality of telecommunication services based on the first usage pattern to fulfill the first usage pattern; and
modifying the one or more telecommunication services based on information associated with the first usage pattern to customize the one or more telecommunication services for communication between the user and the one or more people.

2. The method of claim 1,
wherein said server is a personal service server; and
wherein the determining the one or more telecommunication services is further based on a telecommunication service request received from a user.

3. The method of claim 2 wherein the telecommunication service request received from the user is received by a digital personal assistant module.

4. The method of claim 2 further comprising:
processing the telecommunication service request using speech recognition, handwriting recognition, text processing, or any combination thereof.

5. The method of claim 1 further comprising:
determining a future telecommunication service request associated with a user based on the first usage pattern; and determining whether to process the future telecommunication service request based on a user response.

6. The method of claim 5 further comprising:
querying, by a digital personal assistant module, the user regarding the future telecommunication service request; and
receiving the user response associated with the future telecommunication service request.

7. The method of claim 1 further comprising:
selecting a pre-existing template; and modifying the pre-existing template based on the first usage pattern.

8. The method of claim 7 wherein modifying further comprises generating a first template based on the first usage pattern.

9. A computer program product, tangibly embodied in an information carrier, the computer program product including instructions being operable to cause a data processing apparatus to:
monitor a plurality of telecommunication service requests associated with a user, wherein the telecommunication service requests are received over a carrier network and the telecommunication service requests are between the user and one or more people;
determine a first usage pattern for the user with the server based on the plurality of telecommunication service requests associated with the user;
determine one or more telecommunication services from a plurality of telecommunication services based on the first usage pattern to fulfill the first usage pattern; and
modify the one or more telecommunication services based on information associated with the first usage pattern to customize the one or more telecommunication services for communication between the user and the one or more people.

10. A system for personal service integration on a network, the system comprising:
a personal service module configured to monitor a plurality of telecommunication service requests associated with a user, wherein the telecommunication service requests are received over a carrier network and the telecommunication service requests are between the user and one or more people;
a personal service server configured to:
(a) determine a first usage pattern for the user with the server based on the plurality of telecommunication service requests associated with the user,
(b) determine one or more telecommunication services from a plurality of telecommunication services based on the first usage pattern to fulfill the first usage pattern; and
a service module configured to modify the one or more telecommunication services based on information associated with the first usage pattern to customize the one or more telecommunication services for communication between the user and the one or more people.

11. An apparatus for personal service integration on a network, the apparatus comprising:
means for monitoring a plurality of telecommunication service requests associated with a user, wherein the telecommunication service requests are received over a carrier network and the telecommunication service requests are between the user and one or more people;
means for determining a first usage pattern for the user with the server based on the plurality of telecommunication service requests associated with the user and determining one or more telecommunication services from a plurality of telecommunication services based on the first usage pattern to fulfill the first usage pattern; and
a means for modifying the one or more telecommunication services based on information associated with the first sage pattern to customize the one or more telecommunication services for communication between the user and the one or more people.

12. The apparatus of claim 11, further comprising:
means for receiving a request from a user; and
wherein said determining the one or more telecommunication services from the plurality of telecommunication services is based on the request from the user.

13. The apparatus of claim 12 further comprising:
means for converting the request from the user from a vocal request to a text based request.

14. The apparatus of claim 11 further comprising:
means for storing the first usage pattern, the plurality of telecommunication service requests, or any combination thereof.

15. The apparatus of claim 11 further comprising:
means for receive telecommunication service requests from the user, to query the user regarding a future telecommunication service request, or any combination thereof.
